# EUROPÄISCHE PATENTSCHRIFT

(11) **EP 3 198 208 B1**
(45) Veröffentlichungstag und Bekanntmachung des Hinweises auf die Patenterteilung: **05.12.2018**
(21) Anmeldenummer: 15778223.6
(22) Anmeldetag: 23.09.2015
(51) Int. Cl.: F28F 9/007, B28B 3/26, F28F 21/06, F28D 20/00, F23J 15/00, F23J 15/02, F23J 15/06, F23J 15/08, F23J 15/04, F28D 19/04, F23L 15/04

(54) **WÄRMESPEICHERKOMPONENTE UND DAMIT AUSGERÜSTETE WÄRMETAUSCHER, INSBESONDERE FÜR RAUCHGASREINIGUNGSANLAGEN VON KRAFTWERKEN**
HEAT STORE COMPONENT AND HEAT EXCHANGER EQUIPPED THEREWITH, IN PARTICULAR FOR FLUE-GAS CLEANING SYSTEMS OF POWER PLANTS
COMPOSANT D'ÉCHANGEUR DE CHALEUR ET ÉCHANGEUR DE CHALEUR ÉQUIPÉ DUDIT COMPOSANT, EN PARTICULIER POUR DES INSTALLATIONS D'ÉPURATION DE GAZ DE FUMÉE

(30) Priorität: 26.09.2014 DE 102014114050
(43) Veröffentlichungstag der Anmeldung: 02.08.2017
(73) Patentinhaber: ElringKlinger AG, 72581 Dettingen (DE)
(72) Erfinder: SCHLIPF, Michael, 84508 Burgkirchen (DE); WIDMANN, Katja, 73434 Aalen (DE)
(74) Vertreter: Hoeger, Stellrecht & Partner Patentanwälte mbB
(86) Internationale Anmeldenummer: PCT/EP2015/071855
(87) Internationale Veröffentlichungsnummer: WO 2016/046258

(56) Entgegenhaltungen:
- DE-C1- 19 512 351
- US-A1- 2014 074 314

## Beschreibung

Die Erfindung betrifft eine Wärmespeicherkomponente, gemäß Anspruch 1, insbesondere für die Ausrüstung von Wärmetauschern, die beispielsweise in Rauchgasreinigungsanlagen von Kraftwerken zum Einsatz kommen können. Die Wärmespeicherkomponente umfasst Wärmespeichermedien mit einer Vielzahl an parallelen Strömungskanälen, durch die ein Gasstrom, z.B. Rauchgas, unter Abgabe von Wärme an die Wärmespeichermedien, oder Reingas, unter Aufnahme von Wärme, hindurchgeleitet werden kann.

Solche Wärmespeicherkomponenten sind von sogenannten Ljungström-Wärmetauschern bekannt. Bei deren Einsatz in Rauchgasentschwefelungsanlagen (REA) werden Roh- und Reingasströme räumlich getrennt gegenläufig durch einen Rotor geleitet, der mit den Wärmespeicherkomponenten bestückt ist. Neben dem Einsatz im Bereich der REA werden Ljungström-Wärmetauscher in Kraftwerken auch noch zur Vorwärmung der Verbrennungsluft (LUVO) oder zur zusätzlichen Erhitzung der Rauchgase für optionale Reaktionsbedingungen in den Modulen der selektiven, katalytischen Entstickung (SCR) eingesetzt.

In dem Bereich, in dem Roh- oder Rauchgas durch den Rotor strömt, werden die Wärmespeichermedien der Wärmespeicherkomponenten aufgeheizt, das Roh- oder Rauchgas kühlt dabei ab. In dem Bereich, in dem Reingas, in der Regel in umgekehrter Strömungsrichtung, durch den Rotor strömt, geben die Wärmespeichermedien Energie an das Reingas ab, dessen Temperatur dabei ansteigt, die Wärmespeichermedien kühlen dabei wieder ab.

Bei der Abkühlung der Roh- oder Rauchgase können diese eine Temperatur unter dem sogenannten Taupunkt (T_{D}) erreichen, unter dem der in dem Roh- oder Rauchgas enthaltene Wasserdampf kondensiert und sich zusammen mit Anteilen an SO₃, HF und HCl auf den Oberflächen der Wärmespeichermedien als hochkorrosive Mischung niederschlägt. Die Lage innerhalb eines Wärmetauscherrotors, in der bei üblichen Betriebsbedingungen der Taupunkt T_{D} unterschritten wird, bezeichnet man als Kaltendlage.

Von den in diesem Bereich des Rotors verwendeten Wärmespeichermedien wird deshalb neben der Temperaturbeständigkeit auch eine sehr hohe Korrosionsfestigkeit gefordert. Da die hochkorrosiven Niederschläge, typischerweise mit Ascherückständen vermischt, regelmäßig von den Wärmespeichermedien entfernt werden müssen, ist eine einfache Handhabung der Wärmespeicherkomponenten und eine effiziente Möglichkeit zur Abreinigung der Wärmespeichermedien ebenfalls von großer wirtschaftlicher Bedeutung.

Als Wärmespeichermedien wurden bislang Stapel aus gewellten Stahl- oder Edelstahlblechen verwendet, wobei im besonders kritischen Bereich der Wärmespeicherkomponenten, in dem der Taupunkt T_{D} erreicht wird, auch schon emaillierte Stahlbleche als Wärmespeichermedium verwendet wurden.

Daneben wurden als Wärmespeichermedien auch sogenannte Wabenblöcke vorgeschlagen, die einen aus einem Kunststoffmaterial einstückig hergestellten Körper mit einer Vielzahl an parallel zueinander angeordneten Strömungskanälen umfassen, die über Kanalwände voneinander getrennt sind. Die deutsche Patentschrift DE 195 12 351 C1 empfiehlt solche Wärmespeichermedien in Form von Wabenblöcken, hergestellt aus einem Polytetrafluorethylen-Regenerat allein oder in Abmischung mit einem anderen Kunststoff, wobei gegebenenfalls dem oder den Kunststoffen Füllstoffe beigemischt sein können.

Diese Wabenblöcke sind zwar ausreichend wärmebeständig und gegenüber den in den Rauchgasen enthaltenen korrosiv wirkenden Komponenten resistent und somit im Prinzip auch in der Kaltendlage verwendbar, jedoch ist die mechanische Belastbarkeit in der Regel zu gering, um diese wirtschaftlich in Wärmespeicherkomponenten einsetzen zu können. In der Herstellung sind darüber hinaus Verfahrensbedingungen notwendig, die den Herstellungsprozess als solchen teuer machen.

Alternativ wurden in der DE 84 19 655 U1 plattenförmige Elemente als Wärmespeichermedium vorgeschlagen, die auf plattenförmigen Keramikbauteilen aufbauen, welche mit einer Beschichtung aus Polytetrafluorethylen versehen sind.

Aufgrund der Keramikbauteile ist bei diesen Wärmespeichermedien lediglich eine beschränkte Bruchfestigkeit und damit ebenfalls eine zu geringe Praxistauglichkeit gegeben.

Das Dokument US 2014/074314 zeigt eine Wärmespeicherkomponente gemäß dem Oberbegriff des Anspruchs 1.

Bei der Verwendung unterschiedlicher Wärmespeichermedien für den Hochtemperaturbereich und die Kaltendlage tritt häufig das Problem auf, dass insbesondere bei der Reinigung, bei der beispielsweise Druckluft mit 4 bis 5 bar und/oder Wasser mit einem Druck von 80 bis 100 bar eingesetzt wird, sich die Wärmetauschermedien verschieben und gegebenenfalls verklemmen, so dass in manchen Fällen eine Störung des Betriebsablaufs eintritt, die ein sofortiges Abschalten der gesamten Rauchgasreinigungsanlage notwendig macht.

Aufgabe der Erfindung ist es, eine Wärmespeicherkomponente vorzuschlagen, die einfach und sicher gehandhabt sowie wirtschaftlich mit ausreichend guten mechanischen Eigenschaften gefertigt werden kann.

Diese Aufgabe wird erfindungsgemäß durch eine Wärmespeicherkomponente mit den Merkmalen des Anspruchs 1 gelöst.

Aufgrund der Platzierung der ersten und zweiten Wärmespeichermedien in einer gemeinsamen Halterung sind diese einfach zu handhaben, sei es bei der Bestückung der Wärmetauscher, beim Ersatz oder der zeitweisen Entfernung zum externen Abreinigen.

Die Halterung nimmt die Wärmespeichermedien ferner in einer definierten Position zueinander auf, so dass der Gasstrom effizient von der Einlassseite zur Auslassseite durchgeleitet werden kann. Das erste Wärmespeichermedium kann erfindungsgemäß unabhängig von dem zweiten Wärmespeichermedium ausgewählt werden, so dass die Wärmespeicherkomponente gezielt auf den jeweiligen Einsatzzweck mit einem optimalen Kosten/Nutzen-Verhältnis ausrüstbar ist. Darüber hinaus ist eine störungsfreie Reinigung der Wärmespeichermedien möglich.

Ferner sind das Einbringen und der Ausbau der Wärmespeichermedien aufgrund der gemeinsamen Halterung der erfindungsgemäßen Wärmespeicherkomponenten einfacher, insbesondere auch automatisiert realisierbar.

Erfindungsgemäß ist das zweite Wärmespeichermedium dahingehend optimiert, dass es in der sogenannten Kaltendlage des Rotors zum Einsatz kommen kann.

Bei der Durchströmung eines mit den erfindungsgemäßen Wärmespeicherkomponenten bestückten Rotors mit ungereinigtem Rohgas kommt zunächst das erste Wärmespeichermedium damit in Kontakt. Auf der Ausströmseite des Rotors (in der Beschreibung auch als Kaltendlage bezeichnet), wo das Rohgas eine niedrigere Temperatur aufweist, die zumeist in einem Temperaturbereich unterhalb des Taupunkts T_{D} des in dem Rohgas enthaltenen Chemikaliengemisches liegt, wird erfindungsgemäß das zweite Wärmespeichermedium angeordnet.

Das erste Wärmespeichermedium kann auch aus demselben Material wie das zweite Wärmespeichermedium, insbesondere auch mit derselben geometrischen Struktur, in Form von Wabenblöcken, hergestellt sein. Dies schließt die Option ein, dass das erste und das zweite Wärmespeichermedium als Ganzes einstückig hergestellt sind.

Aufgrund der Auswahl des Kunststoffmaterials für die Wabenblöcke des zweiten Wärmespeichermediums, das einen Kunststoff umfasst, der virginales Polytetrafluorethylen (PTFE) mit einem Anteil von ca. 80 Gew.-% oder mehr und gegebenenfalls ein von dem PTFE verschiedenes Hochleistungspolymer mit einem Anteil von ca. 20 Gew.-% oder weniger enthält, gelingt es zudem überraschenderweise, die Wabenblöcke für das zweite Wärmespeichermaterial nicht nur mit deutlich weniger anspruchsvollen Herstellungsbedingungen zu fertigen als die in der DE 195 12 351 C1 beschriebenen Wabenblöcke, sondern die erfindungsgemäß als zweites Wärmespeichermedium verwendeten Wabenblöcke weisen darüber hinaus auch mechanische Festigkeitswerte auf, insbesondere eine Reißfestigkeit und eine Reißdehnung, die erheblich über denen der herkömmlich gefertigten Wabenblöcke liegen.

Vorzugsweise erstreckt sich das zweite Wärmespeichermedium über ca. 10 % bis ca. 60 % des Strömungswegs des Gasstroms von der Einlass- zur Auslassseite der Wärmespeicherkomponente. Weiter bevorzugt erstreckt sich das zweite Wärmespeichermedium über ca. 25 % bis ca. 60 %, insbesondere über ca. 30 % bis ca. 50 %, des Strömungswegs.

Den verbleibenden Teil des Strömungswegs bildet das erste und gegebenenfalls ein weiteres Wärmespeichermedium, wobei das erste und das weitere Wärmespeichermedium aus einem Material gebildet werden können, welches ausgewählt ist aus Stahl, Edelstahl, Corten, emailliertem Stahl, mit einem Epoxidharz-Korrosionsschutz überzogenem Stahl und hochkorrosionsbeständigen NickelChrom-Molybdän-Legierungen. Beispiele für diese Materialien sind CRL-Stahl sowie low-C-P-Cu-Ni-steel sowie insbesondere die Werkstoffe der Nummern 1.4539, 2.4605 und 2.4610.

Gemäß einer Variante der erfindungsgemäßen Wärmespeicherkomponente ist deren Halterung für die Wärmespeichermedien zweiteilig ausgebildet, wobei ein erstes Teil der Halterung die Einlassseite der Wärmespeicherkomponente und ein zweites Teil die Auslassseite der Wärmespeicherkomponente mit umfasst. Vorzugsweise sind das erste und das zweite Teil der Halterung direkt mit einander verbindbar.

Diese zweiteilige Ausgestaltung der Halterung ermöglicht die Bestückung eines der beiden Teile mit den Wärmespeichermedien in einfacher, insbesondere auch automatisierbarer Weise und die nachfolgende Komplettierung der Halterung durch die Montage des anderen Teils vorzugsweise durch eine direkte Verbindung der Teile miteinander.

Die Halterung der erfindungsgemäßen Wärmespeicherkomponente wird bevorzugt als eine Art Korbstruktur ausgebildet, wobei vorzugsweise eine Boden- und eine Oberseite der Korbstruktur voneinander beabstandet angeordnete Streben aufweisen und vorzugsweise gleichzeitig die Einlass- und Auslassseiten der Wärmespeicherkomponente bilden.

Bevorzugt erstrecken sich die Streben jeweils im Wesentlichen über die gesamte Fläche der Bodenseite und der Oberseite der Wärmespeicherkomponente, an denen die Strömungskanäle der Wärmespeichermedien enden.

Die Halterung der erfindungsgemäßen Wärmespeicherkomponente weist vorzugsweise vier Seitenwände auf, von denen zwei, gegebenenfalls auch mehr, als geschlossene Flächen ausgebildet werden können.

Alternativ können alle Seitenwände der Halterung offen ausgebildet sein.

Die erfindungsgemäßen Wärmespeicherkomponenten sind häufig blockartig ausgebildet, wobei sie für die Bestückung von Wärmetauschern in Form von Rotoren bevorzugt einen trapezförmigen Grundriss aufweisen mit einer radial innen liegenden Seitenwand und einer radial außen liegenden Seitenwand, wobei die radial innen liegende Seitenwand eine geringere Ausdehnung aufweist. Die beiden lateralen Seitenwände sind dann im Wesentlichen gleich groß.

Bevorzugt wird die Halterung so ausgebildet, dass mindestens eine der lateral liegenden Seitenwände der Wärmespeicherkomponente offen ist, so dass die Wärmespeichermedien über diese Seitenwand/Seitenwände ungehindert in die Halterung eingesetzt oder aus dieser entnommen werden können.

Gegebenenfalls können die Wärmespeichermedien in der Halterung mit Halteelementen fixiert werden, beispielsweise durch das Einsetzen von Bolzen.

Weiter bevorzugt weist die Halterung auf zwei gegenüberliegenden Seitenwänden zu einem Rahmen verbundene Stege auf, wobei die Rahmen an der Boden- und an der Oberseite der Wärmespeicherkomponente über Streben miteinander verbunden und auf Abstand zueinander gehalten sind. Vorzugsweise sind die Rahmen an den radial innen und außen liegenden Seitenwänden der Wärmespeicherkomponente angeordnet.

Die Halterung wird bevorzugt aus Baustahl, Edelstahl, Corten, emailliertem Stahl, mit Epoxidharz-Korrosionsschutz überzogenem Stahl oder hochkorrosionsbeständigem Edelstahl sowie Sonderwerkstoffen aus hochkorrosionsbeständigen NickelChrom-Molybdän-Legierungen (beispielsweise Werkstoffe der Nummern 1.4539, 2.4605 und 2.4610) gefertigt.

Vorzugsweise kommt als Kunststoff ein virginales PTFE mit einer Schmelzenthalpie von ca. 40 J/g oder mehr zum Einsatz.

Die Dichte von bevorzugten PTFE-Materialien beträgt ca. 2,1 g/cm³ oder mehr.

Das erfindungsgemäß einzusetzende virginale PTFE kann einen Co-Monomeranteil von ca. 1 Gew.-% oder weniger, bevorzugt ca. 0,1 Gew.-% oder weniger, aufweisen. Virginale PTFE-Materialien mit einem solchen Co-Monomeranteil sind typischerweise ohne Zusatz von Fremdmaterial (z.B. PFA) schweißbar. Typische Co-Monomere sind Hexafluorpropylen, Perfluoralkylvinylether, Perfluor-(2,2-dimethyl-1,3-dioxol) und Chlortrifluorethylen.

Erfindungsgemäß wird bevorzugt das virginale PTFE und gegebenenfalls das von dem PTFE verschiedene Hochleistungspolymer mit einer mittleren Primärpartikelgröße D₅₀ von ca. 10 µm bis ca. 200 µm, bevorzugt ca. 10 µm bis ca. 100 µm, eingesetzt. Mit diesen Partikelgrößen lassen sich bei der Herstellung der Wabenblöcke insbesondere
- gute Oberflächeneigenschaften, insbesondere geringe Rautiefen und eine leichte Abreinigbarkeit,
- homogene Verteilungen der optional mitzuverarbeitenden Füllstoffe,
- gute mechanische Eigenschaften mit hoher Reißfestigkeit und Reißdehnung,
- selbst bei der Anwendung von niedrigen bis mittleren Pressdrücken gute mechanische Eigenschaften
erzielen.

Gesintertes PTFE, und hierzu ist auch PTFE-Regenerat zu zählen, lässt sich aufgrund der geringeren Kristallinität gegenüber virginalem PTFE lediglich mit Partikelgrößen von ca. 400 µm oder größer erhalten.

Vorstehend wird auf die Primärpartikelgröße Bezug genommen, da auch Partikelagglomerate von virginalem PTFE mit erheblich größeren Teilchengrößen verarbeitbar sind, vorausgesetzt, die Partikelagglomerate zerfallen bei den Verarbeitungsbedingungen in ihre Primärpartikel. Beispielsweise lassen sich Partikelagglomerate mit Partikelgrößen von 100 µm bis 3000 µm einsetzen, wenn diese bei ca. 150 bar oder weniger in die Primärpartikel zerfallen.

Geeignete Füllstoffe beinhalten sowohl nicht-metallische als auch metallische Füllstoffe, die auch in einer Mischung eingesetzt werden können. Als Füllstoffe kommen nicht nur partikuläre Füllstoffe, sondern auch faserförmige Füllstoffe in Frage. Mit den Füllstoffen lassen sich insbesondere sowohl die Wärmeleitfähigkeit als auch die Wärmekapazität der erfindungsgemäß zu verwendenden Kunststoffmaterialien und gegebenenfalls auch die mechanischen Eigenschaften des erfindungsgemäßen Wabenblocks optimieren.

Bevorzugt enthält das Kunststoffmaterial einen nichtmetallischen Füllstoff und/ oder einen metallischen Füllstoff, wobei die mittlere Partikelgröße D₅₀ des jeweiligen Füllstoffes vorzugsweise ca. 100 µm oder weniger beträgt.

Im Hinblick auf die bevorzugte Auswahl der Primärpartikelgröße der erfindungsgemäß zu verwendenden Kunststoffe wird die Partikelgröße der Füllstoffe im Hinblick auf die anzustrebende gleichmäßige Verteilung im Kunststoffmaterial ca. 2 µm bis ca. 300 µm, bevorzugt ca. 2 µm bis ca. 150 µm, betragen.

Das Verhältnis der mittleren Partikelgröße D₅₀ der Primärpartikel des Kunststoffs oder der Kunststoffe zu der mittleren Partikelgröße D₅₀ der Füllstoffe liegt vorzugsweise in dem Bereich von ca. 1:2 bis ca. 2:1.

Bevorzugt ist der nicht-metallische Füllstoff mit einem Anteil von bis zu ca. 80 Gew.-%, weiter bevorzugt bis zu einem Anteil von ca. 40 Gew.-% am meisten bevorzugt von bis zu ca. 35 Gew.-% in dem Kunststoffmaterial enthalten. Von dem metallischen Füllstoff können aufgrund seiner höheren Dichte Anteile von bis zu ca. 90 Gew.-%, bevorzugt bis zu ca. 60 Gew.-% in dem Kunststoffmaterial enthalten sein.

Der gesamte Volumenanteil der Füllstoffe in dem Kunststoffmaterial kann maximal ca. 90 Vol.-% betragen, sollte aber bevorzugt ca. 50 Vol-% oder weniger betragen, weiter bevorzugt ca. 40 Vol-% oder weniger.

Bevorzugt weist das zu dem Wabenblock verarbeitete Kunststoffmaterial eine Reißfestigkeit von ca. 10 N/mm² oder mehr auf, gemessen nach ISO 12086-2 (EN ISO 12086-2:2006-05) mit einem streifenförmigen Prüfkörper mit einem Querschnitt von 1 x 5 mm². Die Reißfestigkeit des Kunststoffmaterials des Wabenblocks beträgt bei diesen streifenförmigen Probekörpern bevorzugt 15 N/mm² oder mehr, weiter bevorzugt ca. 20 N/mm² oder mehr, noch weiter bevorzugt ca. 25 N/mm² oder mehr. Typischerweise wird die Reißfestigkeit ca. 35 N/mm² oder weniger betragen. Innerhalb des vorstehend definierten Bereichs an Reißfestigkeiten werden mit Kunststoffmaterialien ohne Füllstoffe die höheren Werte und mit Kunststoffmaterialien mit Füllstoffen eher die niedrigeren Werte erzielt.

Bevorzugt beträgt die Reißdehnung des zu dem Wabenblock verarbeiteten Kunststoffmaterials, gemessen nach ISO 12086-2 (EN ISO 12086-2:2006-05) an einem streifenförmigen Probekörper mit einem Querschnitt von 1 x 5 mm², ca. 80 % oder mehr, insbesondere ca. 100 % oder mehr, weiter bevorzugt ca. 150 % oder mehr, am meisten bevorzugt ca. 200 % oder mehr.

Erfindungsgemäß sind Wabenblöcke mit sehr gut abreinigbaren Oberflächen erhältlich, wobei hierzu der Mittenrauwert Ra der Oberflächen des Wabenblocks, gemessen nach DIN EN ISO 1302 in Längsrichtung der Wabenblockkanäle, ca. 10 µm oder weniger, bevorzugt ca. 5 µm oder weniger, beträgt.

Vorzugsweise beträgt im Hinblick auf die Reinigbarkeit die Rautiefe Rz der Oberflächen des Wabenblocks, gemessen nach DIN EN ISO 1302 in Längsrichtung der Strömungskanäle des Wabenkörpers, ca. 50 µm oder weniger, insbesondere ca. 40 µm oder weiniger, bevorzugt ca. 30 µm oder weniger, am meisten bevorzugt ca. 20 µm oder weniger.

Die erfindungsgemäßen Wabenblöcke weisen bevorzugt ein Kunststoffmaterial mit einer Wärmeleitfähigkeit von ca. 0,3 W/(m · K) oder mehr auf.

Die erfindungsgemäßen Wabenblöcke weisen bevorzugt ein Kunststoffmaterial mit einer Wärmekapazität von ca. 0,9 J/(g · K) oder mehr auf.

Die vorstehend empfohlenen Werte für die Wärmeleitfähigkeit und die Wärmekapazität begünstigen einen effektiven Wärmeaustausch zwischen den aus dem Wabenblock gebildeten Wärmetauscherelementen und dem durchströmenden Rauchgas sowie die Speicherfähigkeit des Wärmetauscherelements.

Bei der Geometrie der erfindungsgemäßen Wabenblöcke sind vielfältige Ausgestaltungen möglich.

Gemäß einer bevorzugten Geometrie weisen die Strömungskanäle einen polygonalen, insbesondere einen quadratischen oder hexagonalen, Querschnitt auf.

Die Kanalwände der Strömungskanäle des Wabenblocks weisen bevorzugt eine Dicke von ca. 0,8 mm bis ca. 2 mm, bevorzugt bis ca. 1,6 mm auf.

Die offene Querschnittsfläche der Strömungskanäle eines Wabenblocks summiert sich vorzugsweise auf ca. 75 % oder mehr der Grundfläche des Wabenblocks.

Die Wabenblöcke der vorliegenden Erfindung können entweder als solche oder in ihrer Geometrie durch Zuschnitt angepasst als Wärmetauscherelement eingesetzt werden.

Die Wärmetauscherelemente, die der Bestückung eines Rotors dienen, werden typischerweise in mehreren unterschiedlichen Abmessungen ihrer Grundflächen benötigt.

Die Wabenblöcke lassen sich wirtschaftlich als Einheiten mit einer Grundfläche von beispielsweise 440 mm x 450 mm und einer Höhe (entsprechend der Strömungskanallänge) von 150 mm herstellen. In einer anderen Konfiguration betragen die Abmessungen der Grundfläche beispielsweise 510 mm x 525 mm bei einer Höhe von 250 mm. Die Strömungskanalgeometrie kann beispielsweise einen hexagonalen Querschnitt aufweisen mit einer Kantenlänge von ca. 7,2 mm.

Werden die Wärmetauscherelemente in größeren Abmessungen benötigt, kann in einfacher Weise ein Wärmetauscherelement in der jeweils benötigten Geometrie unter Verwendung von zwei oder mehreren erfindungsgemäßen Wabenblöcken hergestellt werden.

Hierzu können die zwei oder mehr Wabenblöcke in Längsrichtung der Strömungskanäle hintereinander zur Variation der Strömungskanallänge verbunden werden. Die Strömungskanäle der Wabenblöcke werden dabei vorzugsweise fluchtend ausgerichtet.

Wird eine Vergrößerung der Grundfläche angestrebt, werden die Wabenblöcke mit den Strömungskanälen parallel nebeneinander ausgerichtet zu einem Wärmetauscherelement verbunden.

Selbstverständlich kann auch eine Verbindung von mehreren Wabenblöcken zur Vergrößerung der Grundfläche und zur Verlängerung der Strömungskanäle kumulativ erfolgen.

Die Verbindung der Wabenblöcke zu einem als Ganzes handhabbaren Wärmetauscherelement kann mechanisch, beispielsweise mittels eines Form- oder Kraftschlusses, erfolgen, oder stoffschlüssig, beispielsweise durch Verkleben oder Verschweißen.

Das Wärmetauscherelement kann auch in diesem Fall in seiner Geometrie den Erfordernissen durch Zuschneiden oder Zusägen angepasst und insbesondere in einer Ebene senkrecht zur Längsrichtung der Strömungskanäle keilförmig ausgebildet werden.

Die bei einem Zuschnitt der Wabenblöcke oder Wabenkörper abgetrennten Teile der Wabenstrukturen lassen sich ohne weiteres mit einem Wabenblock zur Herstellung weiterer Wärmetauscherelemente in der oben schon beschriebenen Weise verbinden.

Die Erfindung betrifft schließlich noch einen Wärmetauscher, der mit den erfindungsgemäßen Wärmespeicherkomponenten ausrüstbar ist.

Bevorzugt sind die erfindungsgemäßen Wärmespeicherkomponenten austauschbar in dem Wärmetauscher platzierbar.

Bevorzugt ist der Wärmtauscher als Rotor ausgebildet, wobei der Rotor vorzugsweise Kammern zur Aufnahme einzelner oder mehrerer der erfindungsgemäßen Wärmespeicherkomponenten aufweist.

Diese und weitere vorteilhafte Ausgestaltungen der Erfindung werden anhand der Zeichnung nachfolgend noch näher erläutert.

Es zeigen im Einzelnen:
- Figur 1: eine schematische Darstellung eines Kohle-Kraftwerks mit einer Rauchgasreinigungsanlage;
- Figur 2: eine schematische Darstellung eines erfindungsgemäßen Wärmetauschers in Form eines Rotors zur Aufnahme von erfindungsgemäßen Wärmespeicherkomponenten;
- Figuren 3A bis 3C: eine schematische Darstellung dreier in ihrer Grundflächen-geometrie trapezförmig ausgebildeter erfindungsgemäßer Wärmespeicherkomponenten;
- Figur 4: eine schematische Darstellung eines erfindungsgemäß verwendbaren Wärmespeichermediums; und
- Figuren 5A und 5B: fotografische Abbildungen von Materialproben nach dem Stand der Technik und gemäß der vorliegenden Erfindung, jeweils mit Wärmeleitpigment.

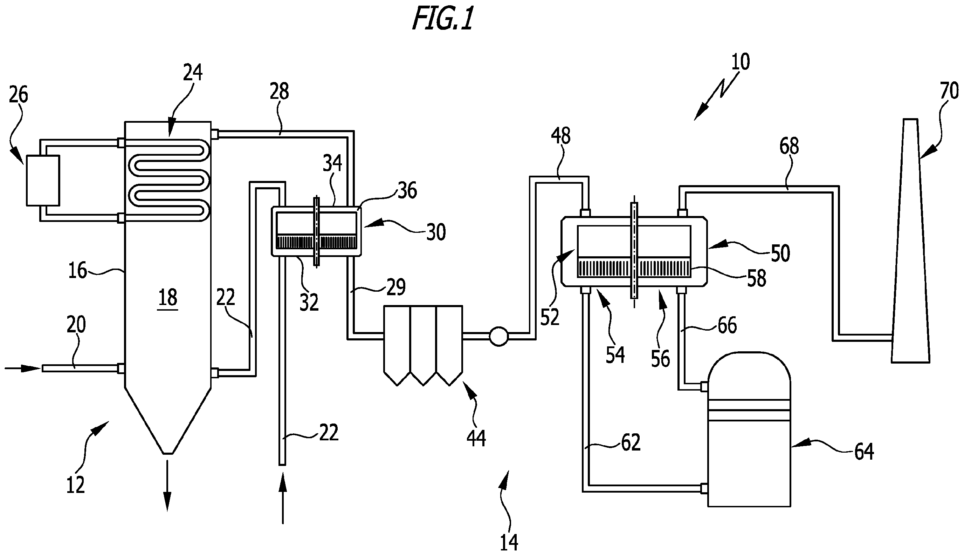

Figur 1 zeigt eine schematische Darstellung eines Kohlekraftwerks 10 mit einem Brenner 12 und einer Rauchgasreinigungsanlage 14. Der Brenner 12 umfasst einen Kessel 16 mit einem Brennraum 18, dem über eine Brennstoff-Versorgungsleitung 20 Kohle in gemahlener Form und über eine Zuleitung 22 Verbrennungsluft zugeführt wird. Oberhalb des Brennraums 18 ist in dem Kessel 16 ein Dampferzeuger 24 angeordnet, in dem zum Betrieb einer Dampfturbine 26 Wasserdampf erzeugt wird. Die Dampfturbine 26 treibt einen nicht dargestellten Stromgenerator an. Das bei der Verbrennung der Kohle im Brennraum 18 entstehende Rauchgas wird über eine Rauchgasleitung 28 aus dem Kessel 16 abgeführt.

Die Verbrennungsluft wird über die Zuleitung 22 vor dem Einspeisen in den Brennraum 18 des Kessels 16 über einen Wärmetauscher 30 geleitet und dort von dem über die Rauchgasleitung 28 eingespeisten Rauchgas aufgewärmt. Der Wärmetauscher weist einen Zuluftbereich 32 und einen Rauchgasbereich 34 auf. In dem Wärmetauscher 30 sind in vertikaler Richtung gesehen mehrere Temperaturzonen vorhanden, wobei die Zone, bei der die Temperatur des Rauchgases unter die Kondensationstemperatur (Taupunkt T_{D}) sinkt, aufgrund der sich dann ergebenden Kondensationsprodukte besonders korrosionsgefährdet ist.

In dem Wärmetauscher 30 ist ein Rotor 36 mit einem Wärmespeicher- und -übertragungungsmedium bestückt vorhanden, das im Rauchgasbereich 34 Wärme von dem dort hindurchgeleiteten Rauchgas aufnimmt und beim Passieren des gegenüber liegenden Zuluftbereichs 32 die Wärme an die dort hindurchströmende Verbrennungsluft abgibt. Die Temperatur des Rauchgases sinkt beim Durchgang durch den Wärmetauscher 30 beispielsweise von ca. 250 °C auf ca. 160 °C, während sich die Temperatur der Zuluft von Umgebungstemperatur beispielsweise auf ca. 150 °C erhöht.

Das abgekühlte Rauchgas wird zur Entstaubung durch die Leitung 29 einem elektrostatischen Partikelabscheider, im Folgenden kurz ESP-Einheit 44 genannt, zugeführt.

Nach der ESP-Einheit 44 wird das aufbereitete (großenteils entstaubte) Rauchgas über eine Leitung 48 einem regenerativen Wärmetauscher 50, auch kurz REGA-VO genannt, zugeführt, in dem das aufbereitete Rauchgas beispielsweise von ca. 160 °C auf eine Temperatur von ca. 90 °C oder niedriger weiter abgekühlt wird.

Der Wärmetauscher 50 enthält einen mit einem Wärmespeicher- und -übertragungsmedium bestückten Rotor 52, der die von dem entstaubten Rauchgas abgegebene Wärme aufnimmt, das hierfür durch einen ersten Bereich 54 des Wärmetauschers 50 hindurchgeleitet und danach über die Leitung 62 einer Rauchgasentschwefelungsanlage 64 zugeführt wird.

Die Temperatur des entstaubten Rauchgases sinkt beim Durchgang durch den ersten Bereich 54 des Wärmetauschers 50 von beispielsweise ca. 150 °C auf ca. 85 bis ca. 90 °C.

Das aus der Rauchgasentschwefelungsanlage 64 kommende entschwefelte Rauchgas weist immer noch eine Temperatur im Bereich von beispielsweise ca. 40 bis ca. 50 °C auf und wird über die Leitung 66 durch einen zweiten Bereich 56 des Wärmetauschers 50 im Gegenstrom zum noch nicht entschwefelten Rauchgas geführt und dadurch auf ca. 90 bis ca. 100 °C erwärmt.

Vom Wärmetauscher 50 führt eine Leitung 68 das entschwefelte wieder erwärmte Rauchgas zum Schornstein 70. Durch die erneute Erwärmung auf ca. 90 bis ca. 100 °C weist das Rauchgas einen genügend großen Auftrieb auf, um aus dem Schornstein in die Atmosphäre zu gelangen.

Optional kann zwischen der Rauchgasentschwefelungsanlage (REA) 64 und dem Schornstein 70 ein weiteres Modul (nicht gezeigt) in den Rauchgasstrom zur katalytischen Entstickung (SCR) des Rauchgases integriert sein. Auch dieses kann, ähnlich wie die REA, mit einem Ljungströmwärmetauscher ausgerüstet sein um die Wirkung des Katalysators zu erhöhen.

Für die Zulufterwärmung und in Rauchgasentschwefelungsanlagen in dem gezeigten und in einer Vielzahl von anderen Konzepten werden als Wärmetauscher sogenannten Ljungström-Gasvorwärmer verwendet, die mit einem Rotor 36 bzw. 52 bestückt sind, die den Wärmetransport vom Rauchgasbereich zum Zuluftbereich bzw. vom ersten in den zweiten Bereich des jeweiligen Wärmetauschers 30 bzw. 50 übernehmen.

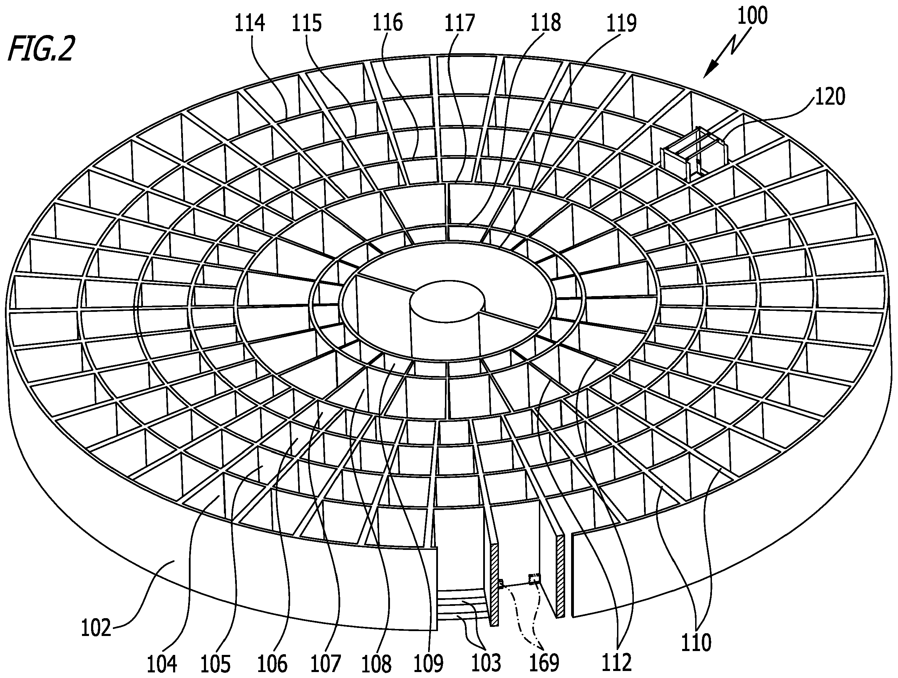

Einen solchen Rotor zeigt Figur 2 schematisch in Form des scheibenförmigen Rotors 100, dessen Durchmesser häufig 20 m und mehr beträgt. Das Volumen des scheibenförmigen Rotors 100 ist von einer zylindrischen Außenwand 102 begrenzt und in eine Vielzahl von Kammern 104, 105, 106, 107, 108, 109 mit im Wesentlichen trapezförmigem Grundriss unterteilt. Die Unterteilung erfolgt einerseits mittels mehrerer radial verlaufender Trennwände 110, 112 und andererseits mittels konzentrisch zur Außenwand ausgebildeter Zylinderwände 114, 115, 116, 117, 118, 119.

Die Kammern 104, 105, 106, 107, 108, 109 lassen sich mit austauschbaren, in der Größe angepassten erfindungsgemäßen Wärmespeicherkomponenten 120 bestücken, die ein erstes und ein zweites Wärmespeichermedium enthalten. Solche Wärmespeichermedien sind mit einer Vielzahl von Strömungskanälen durchsetzt, die parallel zur Axialrichtung des Rotors 100 verlaufen.

Eine der Möglichkeiten, die Wärmespeicherkomponenten 120 in einer Kammer 104, 105, 106, 107, 108, 109 zu lagern, besteht darin, am Boden der jeweiligen Kammer Stützleisten 103 anzuordnen, wie dies beispielhaft in Figur 2 bei einer der vorn liegenden Kammern 104 gezeigt ist.

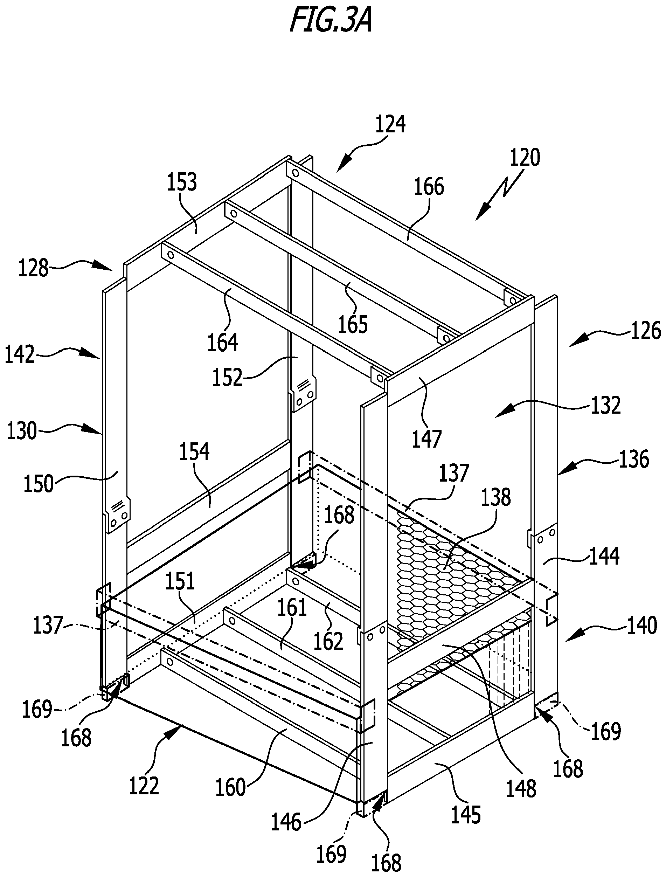

Ergänzend oder auch alternativ können Halteelemente 169 an Wandungen der Kammern 104, 105, 106, 107, 108, 109 befestigt werden, die die Wärmespeicherkomponenten 120 in den Kammern halten und/oder zentrieren. Dies ist ebenfalls beispielhaft an einer Kammer 104 in Figur 2 gezeigt und wird im Zusammenhang mit Figur 3A im Folgenden noch näher beschrieben.

Figur 3A zeigt eine erfindungsgemäße Wärmespeicherkomponente 120 mit einer Bodenseite 122 und einer Oberseite 124 sowie radial innen bzw. außen liegenden Seitenwänden 126, 128. Die radial innen liegende Seitenwand 126 weist eine geringere Breite als die radial außen liegende Seitenwand 128 auf, so dass die Wärmespeicherkomponente 120 einen trapezförmigen Grundriss aufweist. Ferner definieren den blockförmigen Körper der Wärmespeicherkomponente 120 die beiden Seitenwände 130, 132, die lateral angeordnet sind und im Wesentlichen dieselbe Größe aufweisen.

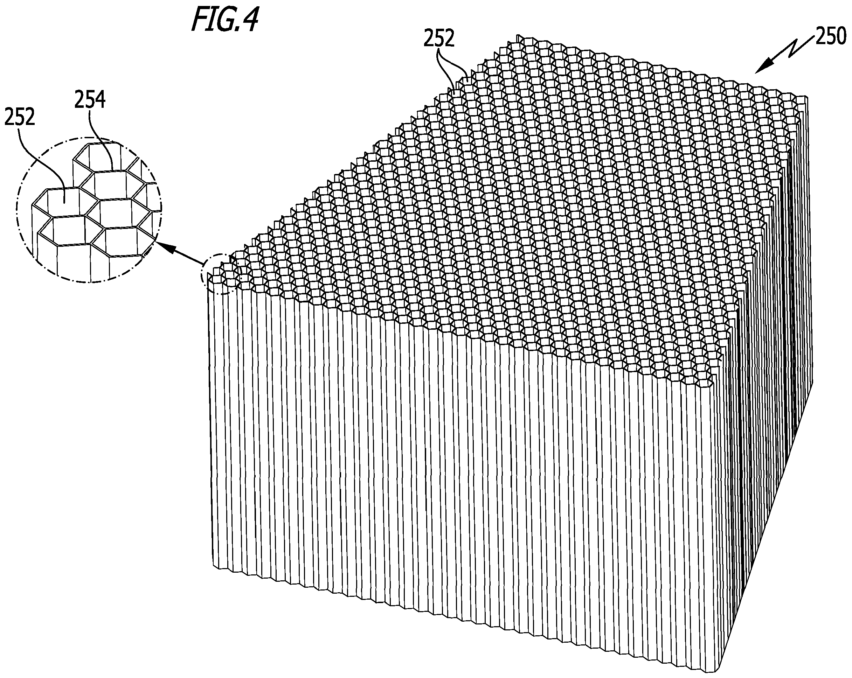

Die Wärmespeicherkomponente 120 setzt sich im Wesentlichen aus einer Halterung 136 sowie in der Halterung platzierten Wärmespeichermedien zusammen, wobei von letzteren nur das zweite Wärmespeichermedium 138 (siehe hierzu auch Figur 4), benachbart zur Bodenseite 122 der Wärmespeicherkomponente 120 eingesetzt, schematisch dargestellt ist.

Die Halterung 136 umfasst auf den radial innen und außen liegenden Seitenwänden 126 bzw. 128 zu einem Rahmen verbundene Stege 144, 145, 146 und 147, 148 bzw. 150, 151, 152, 153, 154.

Die beiden Rahmen 140 und 142 sind über Streben 160, 161, 162 bzw. 164, 165, 166, die sich im Wesentlichen vollständig über die Fläche der Boden- bzw. der Oberseite 122, 124 erstrecken, miteinander verbunden und auf Abstand gehalten.

Diese korbartige oder käfigartige Struktur der Halterung 136 kann dann bequem aus Richtung der lateralen Seitenwände 130, 132 mit den Wärmespeichermedien, z.B. dem zweiten Wärmespeichermedium 138, bestückt werden.

Bei Bedarf können die Wärmespeichermedien nach ihrer Platzierung in der Halterung 136 fixiert werden, beispielsweise durch das Einstecken von Bolzen (nicht gezeigt).

In dem in Figur 3A gezeigten Ausführungsbeispiel nimmt das Wärmespeichermedium 138 etwas mehr als 25 % der Ausdehnung der Wärmespeicherkomponente 120 in der Richtung von der Bodenseite 122 zur Oberseite 124 ein.

Die Durchströmrichtung durch die Wärmespeicherkomponente 120 ist von der Bodenseite 122 zur Oberseite 124 oder umgekehrt. Dementsprechend verlaufen die Strömungskanäle der Wärmespeichermedien und enden jeweils an der Boden- bzw. der Oberseite 122 bzw. 124.

Die beiden Rahmen 140, 142 weisen vorzugsweise an ihren Ecken zumindest im Bereich der Bodenseite 122 Aussparungen 168 auf, zu denen komplementär ausgebildete Halteelemente 169 an der Rotorkammerwand fixiert werden. Bei Einsetzen der Wärmespeicherkomponenten in die jeweilige Rotorkammer sitzen dann die Rahmen 140, 142 bodenseitig mit ihren Ecken auf den Halterungen auf und werden aufgrund des Eingriffs der Halterungen in die Ausnehmungen der Rahmen 140, 142 gleichzeitig in einer vorgegebenen exakten Position fixiert.

Die Aussparungen können auch an der Oberseite der Rahmen 140, 142 vorgesehen werden, wie in der Figur 3A gezeigt, so dass die Halterungen mit den Wärmespeichermedien auch wahlweise mit der Oberseite nach unten in die Rotorkammer eingesetzt werden können.

Die Aussparungen 168 an den Rahmen 140, 142 können in einfacher Weise beispielsweise dadurch erzielt werden, dass die horizontal verlaufenden Stege 145 und 151 (bzw. 147 und 153) nicht bündig mit den vertikal verlaufenden Stegen 144, 146 bzw. 150, 152, sondern versetzt verbunden werden.

Vorzugsweise umfasst die Wärmespeicherkomponente 120 außen an der Halterung 136 montierte, vorzugsweise schmale Leisten 137, die der Sicherung der in die Halterung 136 eingesetzten Wärmespeichermedien 138 dienen. Die Position der Leisten 137 kann, wie in Figur 3A gezeigt, so gewählt werden, dass sowohl das unten eingesetzte zweite Wärmespeichermedium 138 als auch ein darüber noch zu platzierendes erstes Wärmespeichermedium (in Figur 3A nicht gezeigt) in der Halterung 136 gesichert ist.

Gegebenenfalls können im Bodenbereich der Rotorkammern Stützleisten 103 vorgesehen werden, die alternativ oder auch zusätzlich zu den Halteelementen 169 die Wärmespeicherkomponente 120 in der im Rotor 100 eingesetzten Position stützen (vgl. Figur 2).

Die Halterung 136 ist zweiteilig aufgebaut mit einem unteren und einem oberen Teil. Der untere Teil umfasst die Streben 160, 161, 162, die im unteren Bereich liegenden Abschnitte der die Rahmen 140, 142 bildenden Stege 144, 146, 150, 152 sowie die Stege 145, 151 und 148, 154 vollständig. Der obere Teil umfasst die Streben 164, 165, 166, die im oberen Bereich der Halterung 136 angeordneten Stege 147, 153 (vollständig) sowie die Stege 144, 146, 150, 152 (die im oberen Bereich liegenden Abschnitte).

Bevorzugt wird zunächst der untere Teil der Halterung 136 mit dem zweiten Wärmespeichermedium 138 bestückt und danach das erste Wärmespeichermedium (nicht gezeigt) auf dem zweiten Wärmespeichermedium platziert. Darauf folgend kann dann der obere Teil der Halterung 136 mit dem unteren Teil verbunden werden wie beispielhaft in Figur 3A gezeigt.

Bei dieser Vorgehensweise lassen sich die Wärmespeichermedien sowohl manuell als auch automatisiert in den unteren Teil der Halterung 136 einsetzen. Besonders günstig ist hierbei die Aufteilung der Halterung in einen oberen und einen unteren Teil, da so beim Einsetzen nicht die gesamte axiale Höhe der Streben 150, 151, 144 und 146 überwunden werden muss.

Alternativ können der obere und der untere Teil der Halterung 136 vor der Bestückung mit Wärmespeichermedien miteinander verbunden werden, wobei dann das Einbringen und Platzieren des zweiten und des ersten Wärmespeichermediums nicht mehr von oben geschehen kann, sondern von der Seite her erfolgen muss.

Die Leisten 137 werden dann erst nach einer vollständigen Bestückung der Wärmespeicherkomponente 120 mit den Wärmespeichermedien an der Halterung 136 montiert.

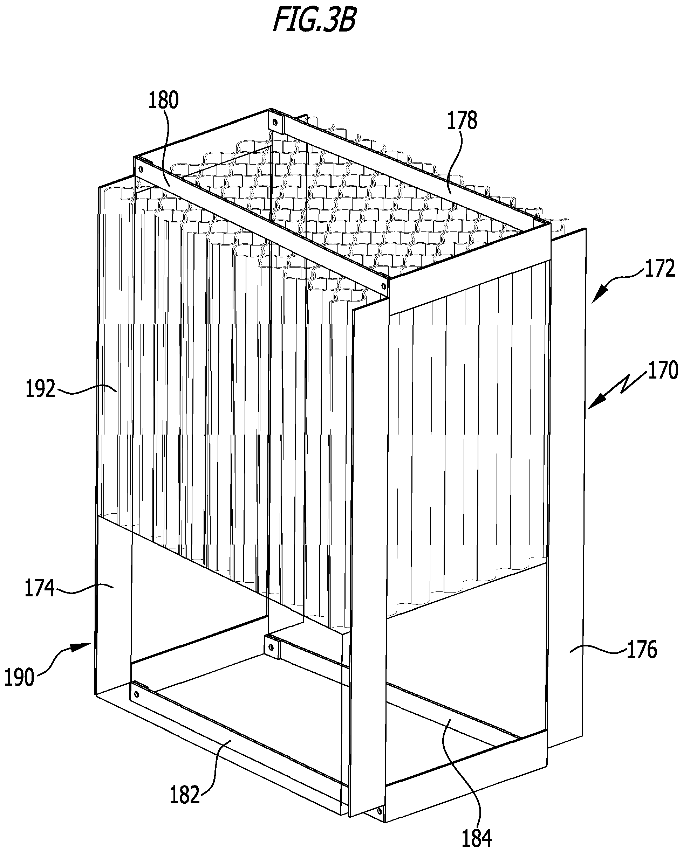

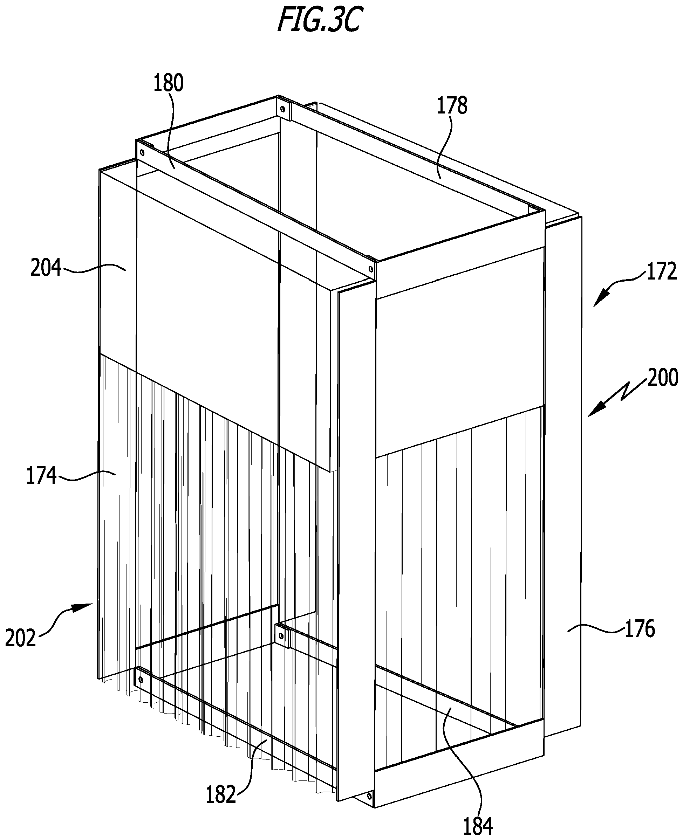

In den Figuren 3B und 3C sind Wärmespeicherkomponenten 170 bzw. 200 gezeigt, die jeweils eine Halterung 172 aufweisen, die ebenfalls korbartig ausgebildet ist wie die Halterung 136 der Ausführungsform der Figur 3A, jedoch mit einer etwas vereinfachten Struktur. Die Aufnahme und Zentrierung kann wie im Zusammenhang mit der Figur 3A beschriebenen Wärmespeicherkomponente 120 erfolgen.

Auch hier sind bei der Halterung 172 Rahmenteile 174, 176 an den radial innen bzw. außen liegenden Seiten der Wärmespeicherkomponente 170 bzw. 200 vorhanden, die aus jeweils vier Stegen gebildet sind. Diese Rahmen 174, 176 werden über Streben 178, 180 bzw. 182, 184 zu einer korbförmigen Aufnahme verbunden und auf Abstand gehalten. Die Streben 180, 178 bzw. 182, 184 sind jeweils voneinander beabstandet angeordnet.

Die Halterung 172 nimmt im Ausführungsbeispiel einer Wärmespeicherkomponente 170 der Figur 3B im unteren Bereich ein zweites Wärmespeichermedium 190 auf, welches erfindungsgemäß aus einem Wabenblock, der im Zusammenhang mit der Figur 4 noch näher beschrieben wird, gebildet ist. Das Wärmespeichermedium 190 nimmt ungefähr ein Drittel der nutzbaren Höhe der Wärmespeicherkomponente 170 zwischen der Bodenseite und der Oberseite ein. Oberhalb des zweiten Wärmespeichermediums 190 ist ein aus profilierten, insbesondere gewellten Stahlblechen gebildetes erstes Wärmespeichermedium 192 angeordnet, das ca. zwei Drittel der nutzbaren Höhe der Wärmespeicherkomponente 170 zwischen der Bodenseite und der Oberseite einnimmt.

Der Gasstrom durch die Wärmespeicherkomponente 170 führt von der Oberseite durch das erste Wärmespeichermedium 192 und die durch die gewellte Form der profilierten Stahlbleche gebildeten Strömungskanäle zu dem zweiten Wärmespeichermedium 190, bei dem in Fortsetzung der Strömungskanäle des ersten Wärmespeichermediums 192 angeordnete Strömungskanäle in der Wabenblockstruktur (im Zusammenhang mit der Figur 4 noch näher beschrieben) vorhanden sind und zur Bodenseite der Wärmespeicherkomponente 170 führen.

In der Figur 3C ist die Wärmespeicherkomponente 200 gezeigt, die ebenfalls eine Halterung 172 aufweist, in der jedoch im unteren Bereich ein erstes Wärmespeichermedium 194 angeordnet ist, das ca. zwei Drittel der nutzbaren Höhe der Wärmespeicherkomponente 200 einnimmt. Die erste Wärmespeicherkomponente 194 ist ähnlich oder gleich wie im Ausführungsbeispiel der Wärmespeicherkomponente 170. Das erste Wärmespeichermedium 192 ist aus einem Stapel profilierter, insbesondere gewellter, Stahlbleche gebildet, während oberhalb des ersten Wärmespeichermediums 194 ein zweites Wärmespeichermedium 204 angeordnet ist, welches aus einem Wabenblock gefertigt wurde ähnlich wie das Wärmespeichermedium 190 der Wärmespeicherkomponente 170.

Diese Wärmespeicherkomponente 200 ist dafür vorgesehen, dass von der Bodenseite das Rauchgas durch das erste Wärmespeichermedium 102 hindurchgeführt wird, von wo es dann bis zur Oberseite geführt wird und im letzten Drittel der Höhe der Wärmespeicherkomponente 200 durch die Strömungskanäle der Wabenblockstruktur des zweiten Wärmespeichermediums 204 hindurchströmt und an der Oberseite durch die dort endenden Strömungskanäle austritt.

Mit diesen unterschiedlichen Anordnungen der ersten und zweiten Wärmespeichermedien 190, 192 bzw. 202, 204 kann der unterschiedlichen Strömungsrichtung in den Rotoren bei unterschiedlichen Anlagen bzw. Anwendungen Rechnung getragen werden, so dass die erfindungsgemäß aus Wabenblöcken gebildeten zweiten Wärmespeichermedien stets in der sogenannten Kaltendlage angeordnet sind, bei der das Rauchgas den Taupunkt T_{D} bzw. eine Temperatur darunter erreicht.

Aufgrund der erfindungsgemäßen Ausgestaltung der Wärmespeicherkomponente, die im Zusammenhang mit den Figuren 3A bis 3C anhand verschiedener Ausführungsbeispiele näher beschrieben ist, ergeben sich vielfältige Vorteile in der Handhabung beim Einbringen in den Rotor, der Abreinigung und auch bei einem eventuell notwendig werdenden Ausbau aus dem Rotor.

Auch wenn dies in den Figuren 3B und 3C im Einzelnen nicht gezeigt ist, lassen sich die Wärmespeichermedien in ähnlicher Weise wie im Zusammenhang mit der Figur 3A beschrieben in den jeweiligen Halterungen 172 mittels Leisten 137 sichern.

Ebenso kann bei den Wärmespeicherkomponenten 170 und 200 ein zweiteiliger Aufbau der Halterung 172 vorgesehen sein, ähnlich dem in Figur 3A gezeigten.

Zur Positionierung der Wärmespeicherkomponenten 170, 200 in einer Kammer eines Rotors können ebenso wie im Zusammenhang mit der Figur 3A beschrieben Stützleisten 103 (vgl. Figur 2) und/oder Halteelemente 169 (vgl. Figuren 2 und 3A) zum Einsatz kommen.

Aufgrund des Aufbaus der Wärmespeicherkomponenten 120, 170 und 200 ist eine einfache Bestückung der jeweiligen Halterungen mit den ersten und zweiten Wärmespeichermedien möglich, ebenso wie eine Sicherung derselben in der jeweiligen Halterung.

Insgesamt können die Wärmespeicherkomponenten 120, 170 und 200 einfach als Ganzes gehandhabt und in einen Rotor bzw. in eine in den Rotoren vorgesehene Kammer eingesetzt oder aus dieser wieder entnommen werden.

Insbesondere lassen sich die Wärmespeichermedien in der Halterung der Wärmespeicherkomponenten auch so sichern, so dass diese beim Einbringen und beim Ausbau maschinell und automatisiert gehandhabt werden können. Dies bedeutet sowohl erheblich geringere Stillstandzeiten der Rauchgasreinigungsanlagen als auch eine höhere Arbeitssicherheit.

Die Vormontage und Bestückung der Wärmespeicherkomponenten 120, 170, 200 mit den Wärmespeichermedien kann jeweils unabhängig von Einbringung und Ausbau am Rotor des Wärmetauschers erfolgen.

Aufgrund der möglichen maschinellen Handhabung können die Wärmespeicherkomponenten größer dimensioniert werden, so dass das Einbringen bzw. der Ausbau zusätzlich effizienter wird.

Auch die Wirtschaftlichkeit eines Kraftwerks insgesamt lässt sich durch die Verwendung erfindungsgemäßer Wärmespeicherkomponenten und damit bestückter Wärmetauscher verbessern.

Figur 4 zeigt einen erfindungsgemäß als zweites Wärmespeichermedium verwendbaren Wabenblock 250 mit einer Vielzahl von parallel zueinander ausgerichteten Strömungskanälen 252, welche voneinander durch Strömungskanalwände 254 getrennt sind.

Die Querschnittsfläche der Strömungskanäle 252 ist hexagonal. Bei einer Strömungskanalwanddicke von 1,2 mm ergibt sich bei einem Abstand der einander gegenüber liegenden Strömungskanalwände von 14,3 mm (Ausdehnung der Kanalwände jeweils ca. 7,2 mm) ein freier Querschnitt für das Durchströmen von Gasen durch den Wabenblock 250 von ca. 83 %, bezogen auf die Grundfläche des Wabenblocks 250. Die spezifische Oberfläche ergibt sich zu ca. 150 m²/m³.

Betragen die Abmessungen einer Wabenblock-Grundfläche 450 mm x 440 mm und die Höhe 150 mm resultiert ein Gewicht des Wabenblocks von ca. 13 kg (beispielsweise aus Inoflon 230 PTFE virginal agglomeriert; Primär-Partikelgröße D₅₀ = 25 µm; Partikelgröße der Agglomerate D₅₀ = 350 µm; Hersteller Gujarat Fluorochemicals Ltd., Indien).

Eine andere Ausführungsform mit einer Grundfläche von 525 mm x 510 mm bei einer Höhe von 250 mm weist ein Gewicht von ca. 34 kg auf (Inoflon 230 PTFE virginal agglomeriert).

Alternativ lässt sich nicht agglomeriertes virginales PTFE (z.B. Inoflon 640; Partikelgröße D₅₀ = 25 µm; Hersteller Gujarat Fluorochemicals Ltd., Indien) verwenden, dem bedarfsweise auch ein Füllstoff in Form eines Wärmeleitpigments auf Graphit- oder Rußbasis im Rahmen einer Compoundierung homogen verteilt beigegeben werden kann. Die bei der Compoundierung entstehenden und anschließend agglomerierten Partikel weisen eine geringere Schüttdichte auf als das agglomerierte virginale PTFE. Aufgrund dessen werden dann bei den Wabenblöcken in den oben genannten Größen Gewichte von ca. 11 kg bzw. ca. 28 kg erhalten.

Aus produktionstechnischen Gründen werden die Wärmespeichermedien häufig nicht einstückig als Ganzes hergestellt, sondern es werden je nach der benötigten Größe mehrere, beispielsweise zwei oder vier, quaderförmige Wabenblöcke miteinander verbunden, insbesondere miteinander verschweißt, und dann wird durch Zuschneiden in die benötigte Keil- oder Trapezform der Wärmespeichermedien hergestellt.

Die Wärmespeicherkomponenten bzw. deren Wärmespeichermedien müssen aufgrund des Eintrags von korrosiven Gasen und Aschepartikeln durch das Rauchgas - auch in dessen aufbereiteter, entstaubter Form - regelmäßig gereinigt werden, so dass deren einfache und sichere Handhabung einerseits, aber auch die einfache Reinigung der Wabenstruktur andererseits von großer Bedeutung ist. Die Reißfestigkeit und die Reißdehnung (gemessen nach ISO 12086-2) der Wabenblockwände sowie deren Oberflächenbeschaffenheit, insbesondere die Chemikalienbeständigkeit und die Rauigkeit, gemessen als Rautiefe und Mittenrauwert (gemessen nach DIN EN ISO 1302), spielen eine dabei große Rolle.

Auch die Wärmebeständigkeit des PTFE-Materials ist von Bedeutung im Hinblick auf die bei den Wärmetauschern auftretenden Temperaturen der Rauchgase von beispielsweise ca. 250 °C.

Für die Effektivität des die Wärmespeichermedien beinhaltenden Rotors bei der Wärmeübertragung von dem einen Gasstrom auf den jeweils im Gegenstrom zugeführten anderen Gasstrom sind die Parameter der Wärmekapazität und der Wärmeleitfähigkeit der verwendeten Wärmespeicher- und -übertragungsmedien von entscheidender Bedeutung.

Die vorliegende Erfindung trägt auch diesen Gesichtspunkten Rechnung durch die Auswahl der Kunststoffmaterialien und gegebenenfalls der Füllstoffe zur Herstellung der Wärmespeichermedien.

Im Folgenden werden die erzielbaren vorteilhaften Eigenschaften der erfindungsgemäß als zweites Wärmespeichermedium verwendeten Wabenblöcke bzw. der daraus hergestellten Wärmetauscherelemente anhand von Beispielen und Vergleichsbeispielen noch näher erläutert.

### Beispiele und Vergleichsbeispiele

Die Werkzeuge, die in den erfindungsgemäßen und Vergleichsbeispielen zur Herstellung von Wabenblöcken verwendet wurden, sind vergleichbar mit denen, die in der DE 195 12 351 C1 für die zweite Variante der Herstellung der Wabenblöcke empfohlen werden.

Geeignete Bedingungen für die Verarbeitung der erfindungsgemäß verwendeten und herkömmlichen Kunststoffmaterialien zu Wabenblöcken mit im Zusammenhang mit der Beschreibung der Figur 4 genannten Abmessungen, die auch bei den nachfolgend noch beschriebenen erfindungsgemäßen Beispielen 1 bis 5 sowie den Vergleichsbeispielen zum Einsatz kommen, sind wie folgt:
- Verpressen der in einer Wabenblock-Form eingefüllten Kunststoffmaterialien bei Raumtemperatur mit 250 bar (Beispiele 1 und 2 sowie die Vergleichsbeispiele V1 und V2) oder 120 bar (Beispiele 3 bis 6 und Vergleichsbeispiele V3 und V4) zu einem Rohling;
- Sinterung der Rohlinge im Umluftofen bei ca. 380 °C für 500 min (alle Beispiele und Vergleichsbeispiele);
- kontrolliertes Abkühlen der gesinterten Wabenblöcke von ca. 380 °C bis auf ca. 300 °C mit einer Abkühlrate von ca. 0,35 °C/min (Beispiele 2 und 4 bis 6 sowie Vergleichsbeispiele V2 und V4); nachfolgend kann schneller abgekühlt werden, beispielsweise mit ca. 0,5 °C/min;

- kontrolliertes Abkühlen der gesinterten Wabenblöcke von ca. 380 °C auf ca. 320 °C mit einer Abkühlrate von ca. 0,35 °C/min (Beispiele 1 und 3 sowie Vergleichsbeispiele V1 und V3); nachfolgend wurde schneller abgekühlt mit ca. 10 °C/min.

Das schnellere Abkühlen bereits ab einer Temperatur von 320 °C ist, wie die Versuchsergebnisse zeigen, im Prinzip möglich, jedoch weniger empfehlenswert, da bei der Temperatur von 320 °C die Rekristallisierung des gelartig vorliegenden PTFE noch nicht erfolgt ist. Dies geschieht erst ab einer Temperatur von etwa 312 °C. Beginnt man bereits bei 320 °C mit dem schnellen Abkühlen, kann es zu einem unerwünschten, nicht kontrollierbaren Volumenschrumpf kommen, so dass die vorgegebene Bauteilgeometrie häufig nicht erhalten werden kann.

Zur Bestimmung der Reißfestigkeit und der Reißdehnung wurden aus den Wabenblöcken Proben mit den Abmessungen 1 mm x 5 mm im Querschnitt und einer Länge von 60 mm entnommen und dem Prüfverfahren nach ISO 12086-2 unterworfen. Die freie Einspannlänge bei der Prüfung betrug 23 mm.

Die Oberflächenrauigkeitswerte Ra und Rz wurden gemäß DIN EN ISO 1302 an Wandoberflächen der erhaltenen Wabenblöcke in Längsrichtung der Strömungskanäle bestimmt.

Bei der Verwendung von virginalem agglomeriertem PTFE-Material (z.B. Inoflon 230) und einem Pressdruck von 120 bar ergibt sich für die im Zusammenhang mit der Figur 3 beschriebenen Wabenblöcke 150 bzw. den daraus hergestellten Wärmespeichermedien ein spezifisches Gewicht von 360 kg/m³. Dieses gesinterte Material wird im Folgenden auch mit PTFE (weiß) bezeichnet.

Wird dagegen ein nicht agglomeriertes virginales PTFE (z.B. Inoflon 640) zusammen mit einem Füllstoff (3 Gew.-%) eines auf Graphit- bzw. Rußbasis hergestellten Wärmeleitpigments (z.B. Timrex C-therm TM002, Partikelgröße D₅₀ = 38 µm; Hersteller TIMCAL Ltd., Schweiz) verwendet, so muss zuerst ein Compound (kornförmiges Granulat) aus dem nicht agglomerierten virginalen PTFE und dem Füllstoff hergestellt werden, um eine homogene Verteilung des Füllstoffs in dem Kunststoffmaterial zu gewährleisten. Anschließend wird das nicht rieselfähige Compound einer Granulierung zur Herstellung agglomerierter Partikel unterworfen. Die dabei erzielte Partikelgröße D₅₀ der Agglomerate kann beispielsweis im Bereich von ca. 1 bis ca. 3 mm liegen. Aufgrund der so gebildeten Agglomerate, die eine geringere Schüttdichte aufweisen als das agglomerierte virginale PTFE, ergibt sich ein geringeres Füllgewicht der Form und demzufolge ein geringeres spezifisches Gewicht der Wabenblöcke von ca. 300 kg/m³, obwohl die Agglomeratpartikel beim Verpressen (Pressdruck von beispielsweise ca. 120 bar) zerfallen. Auf dieses gesinterte Material wird im Folgenden auch unter der Bezeichnung PTFE (schwarz) Bezug genommen.

Erstaunlicherweise ergibt sich trotz des geringeren spezifischen Gewichts für die mit dem Füllstoff modifizierten PTFE-Materialien gegenüber den ungefüllten dichteren PTFE-Materialien eine etwas bessere Wärmekapazität, die darüber hinaus deutlich über der Wärmekapazität von Polypropylen oder auch von Stahl liegt und vergleichbar ist mit der Wärmekapazität von emailliertem Stahl (siehe Tabelle 1). Das erheblich geringere Gewicht der Wabenblöcke erleichtert darüber hinaus auch die Handhabung.

**Tabelle 1**

| Material | spezifisches Gewicht [kg/m³] | Wärmekapazität [J/(g·K)] | Wärmeleitfähigkeit [W/(m·K)] | Wärmetransport pro Umdrehung [kJ/(m³·K)] |
|---|---|---|---|---|
| PTFE (weiß) | 360 | 1,01 | 0,35 | 364 |
| PTFE (schwarz) | 300 | 1,24 | 0,43 | 372 |
| Polypropylen | 150 | 2,0 | 0,22 | 300 |
| Stahl | 850 | 0,46 | 40 | 391 |
| Email-beschichteter Stahl | 850 | 0,50 | 8 | 425 |

Die vorstehend genannten Materialien ergeben unterschiedliche Wärmetransportwerte pro Umdrehung eines Rotors mit einem Durchmesser von 21 m, die in der Tabelle 1 ebenfalls aufgelistet sind. Typische Rotorgeschwindigkeiten sind ca. 40 U/h bis ca. 90 U/h.

Für die im Folgenden erläuterten Beispiele 1 bis 5 kommt als Kunststoffmaterial ein agglomeriertes virginales PTFE (Inoflon 230) zum Einsatz.

Für die Vergleichsbeispiele wird statt dem im Stand der Technik (DE 195 12 351 C1) empfohlenen PTFE-Regenerat aus Gründen der Nacharbeitbarkeit ein vorgesintertes PTFE (Inoflon 510; Partikelgröße D₅₀ = 400 µm; Hersteller Gujarat Fluorochemicals Ltd., Indien) verwendet, das in seinen Verarbeitungseigenschaften vergleichbar ist mit einem PTFE-Recyclat bzw. -Regenerat.

Die Versuchsergebnisse bezüglich unterschiedlicher Parameter sind für die Beispiele und Vergleichsbeispiele in der folgenden Tabelle 2 aufgelistet:

**Tabelle 2**

| Beispiel | Kunststofftyp | Pressdruck [bar] | Mechanische Eigenschaften | | Oberflächenrauigkeit | |
|---|---|---|---|---|---|---|
| | | | Reißfestigkeit [N/mm²] | Reißdehnung [%] | Ra [µm] | Rz [µm] |
| V1 | Inoflon 510 | 250 | 0,2 | 1 | 24 | 136 |
| V2 | Inoflon 510 | 250 | 0,2 | 5 | 15 | 90 |
| V3 | Inoflon 510 | 120 | 0,4 | 18 | 24 | 147 |
| V4 | Inoflon 510 | 120 | 0,4 | 5 | 20 | 121 |
| 1 | Inoflon 230 | 250 | 18,2 | 172 | 1 | 9 |
| 2 | Inoflon 230 | 250 | 25,6 | 213 | 2 | 9 |
| 3 | Inoflon 230 | 120 | 22,1 | 219 | 1 | 10 |
| 4 | Inoflon 230 | 120 | 19,4 | 212 | 2 | 13 |
| 5 | Inoflon 230 | 120 | 21,8 | 254 | 2 | 12 |
| 6 | Inoflon 640 mit Füllstoff* | 120 | 10,1 | 120 | 5 | 25 |

| | | | | | | |
|---|---|---|---|---|---|---|
| *3 Gew.-% Wärmeleitpigment (Timrex C-therm TM002) | | | | | | |

Aus den Werten für die mechanischen Eigenschaften ergeben sich für die erfindungsgemäßen Wabenblöcke gegenüber den gemäß der DE 195 12 351 C1 hergestellten deutlich bessere Reißfestigkeiten, und zwar auch bei einem weniger als halb so hohen Pressdruck wie im Stand der Technik empfohlen und auch in großem Umfang unabhängig von dem gewählten Abkühltemperaturprofil.

Darüber hinaus erzielt man bei den erfindungsgemäß als zweites Wärmespeichermedium verwendeten Wabenblöcken wesentlich glattere Oberflächen, die eine viel einfachere Abreinigung von Ablagerungen aus den Rauchgasen möglich machen.

Damit ist nicht nur die Handhabung der Wärmespeichermedien aufgrund der wesentlich verbesserten mechanischen Robustheit verbessert, sondern die Reinigung kann auch effizienter und kostengünstiger vorgenommen werden.

In der Summe ergibt sich somit ein wesentlich wirtschaftlicherer Betrieb der erfindungsgemäßen Wärmespeichermedien gegenüber den in der DE 195 12 351 C1 vorgeschlagenen, selbst unter Berücksichtigung der höheren Kosten für die Ausgangsmaterialien zur Herstellung derselben.

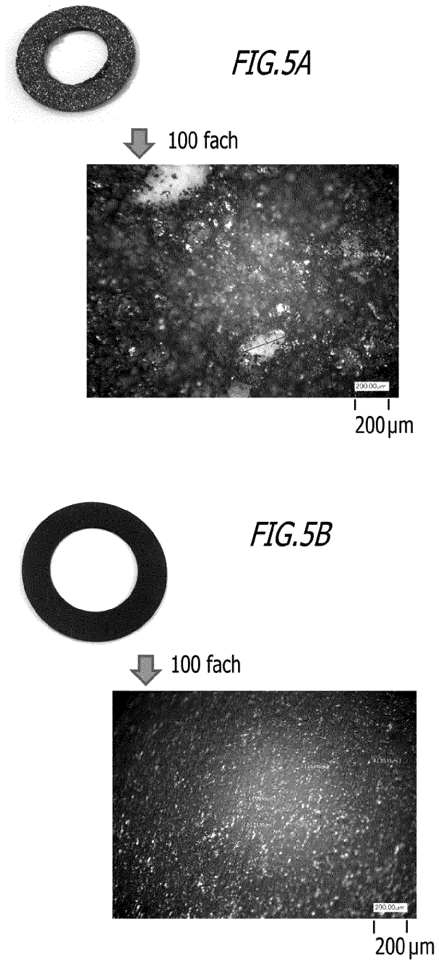

Die Figuren 5A und 5B zeigen zwei Materialproben im Vergleich, wobei im Falle der Figur 5A die Materialprobe auf der Basis einer Mischung von Inoflon 510 (vorgesintertes PTFE) mit einer Partikelgröße D₅₀ von ca. 400 µm und einem Anteil von 3 Gew.-% eines Wärmeleitpigments (Timrex C-therm TM002) mit einer Partikelgröße D₅₀ im Bereich ca. 38 µm hergestellt wurde, während im Falle der Figur 5B eine erfindungsgemäß zusammengesetzte Materialprobe auf der Basis einer Mischung von virginalem agglomerierten PTFE (Inoflon 640) mit einer Primärpartikelgröße D₅₀ von ca. 25 µm und ebenfalls 3 Gew.-% desselben Wärmeleitpigments erhalten wurde.

In beiden Fällen wurde ein hohlzylindrischer Prüfkörper mit einem Außendurchmesser von 75 mm und einem Innendurchmesser von 40 mm mit einem Druck von ca. 120 bar gepresst, danach bei einer Temperatur von ca. 380 °C während 240 min gesintert. Das Abkühlen von ca. 380 °C bis auf Raumtemperatur erfolgte mit einer Abkühlrate von ca. 1 °C/min, entsprechend den Vorgaben des Prüfstandards ASTM D 4894.

Von den zylindrischen Probekörpern wurden Scheiben mit einer Dicke von 1 mm abgetrennt und unter dem Messmikroskop geprüft (siehe Abbildungen der Figuren 5A und 5B).

Während im Fall der erfindungsgemäß zusammengesetzten Probe von dem zylindrischen Prüfkörper eine Folie mit einer Dicke von 1 mm abgeschält werden konnte, war die mechanische Festigkeit und Konsistenz der Vergleichsprobe so gering, dass eine Folie nicht abgeschält werden konnte.

Aus dem Vergleich der beiden Proben wie in den Figuren 5A und 5B dargestellt ist insbesondere in der Vergrößerung ersichtlich, dass mit einem PTFE-Regenerat oder vergleichbaren vorgesinterten PTFE-Qualitäten als Ausgangsmaterial zum Einen keine homogene Verteilung des Wärmeleitpigments in der Mischung erhalten werden kann.

Zum Anderen sind die mechanischen Eigenschaften der auf PTFE-Regenerat basierenden Probe so unzureichend, dass keine im Betrieb eines Rotors längerfristig einsetzbaren Wärmespeichermedien herstellbar sind. Dies ist von besonderer Bedeutung, da die PTFE-Materialien als solche aufgrund ihrer chemischen Inertheit sehr lange Betriebsdauern der Wärmespeichermedien zulassen würden. Diese extrem langen Betriebsdauern, beispielsweise 15 Jahre oder mehr, lassen sich allerdings mit den erfindungsgemäß hergestellten Wärmespeichermedien gewährleisten.

## Patentansprüche

1. Wärmespeicherkomponente (170) für das Durchleiten eines Gasstroms, insbesondere in Wärmetauschern von Rauchgasreinigungsanlagen, mit einer Halterung (172), einem ersten Wärmespeichermedium (192) und einem zweiten Wärmespeichermedium (190), wobei die Halterung (172) eine Einlass- und eine Auslassseite der Wärmespeicherkomponente für den durchzuleitenden Gasstrom bildet, wobei die ersten und zweiten Wärmespeichermedien (192, 190) zwischen der Einlass- und der Auslassseite der Halterung (172) in Durchflussrichtung des Gasstroms hintereinander angeordnet sind und jeweils eine Vielzahl von im Wesentlichen parallelen Strömungskanälen aufweisen, wobei das zweite Wärmespeichermedium (190) aus einem oder mehreren Wabenblöcken (250) gebildet ist, **dadurch gekennzeichnet, dass** der oder die Wabenblöcke (250) einen aus einem Kunststoffmaterial einstückig hergestellten Körper mit einer Vielzahl an parallel zueinander angeordneten Strömungskanälen (252) umfasst, die über Kanalwände voneinander getrennt sind, wobei das Kunststoffmaterial einen Kunststoff umfasst, der virginales Polytetrafluorethylen (PTFE) mit einem Anteil von ca. 80 Gew.-% oder mehr und gegebenenfalls ein von dem PTFE verschiedenes Hochleistungspolymer mit einem Anteil von ca. 20 Gew.-% oder weniger enthält.

2. Wärmespeicherkomponente (170) nach Anspruch 1, **dadurch gekennzeichnet, dass** sich das zweite Wärmespeichermedium (190) über ca. 10 % bis ca. 60 % des Strömungswegs von der Einlass- zur Auslassseite der Wärmespeicherkomponente (170) erstreckt,
wobei optional das erste Wärmespeichermedium (192) aus Stahl, Edelstahl, Corten, emailliertem Stahl, mit Epoxidharz-Korrosionsschutz überzogenem Stahl oder hochkorrosionsbeständigen Nickel-Chrom-Molybdän-Legierungen gebildet ist,
oder dass das erste Wärmespeichermedium (192) identisch mit dem zweiten Wärmespeichermedium (190) aufgebaut ist, wobei optional das erste und das zweite Wärmespeichermedium (192, 190) zu einer Einheit verbunden sind.

3. Wärmespeicherkomponente (170) nach Anspruch 1 oder 2, **dadurch gekennzeichnet, dass** die Halterung (172) zweiteilig aufgebaut ist, wobei ein erstes Teil der Halterung die Einlassseite und ein zweites Teil die Auslassseite der Wärmespeicherkomponente (170) umfasst und wobei das erste Teil mit dem zweiten Teil zur Bildung der Halterung (172) vorzugsweise direkt verbindbar ist.

4. Wärmespeicherkomponente (170) nach einem der Ansprüche 1 bis 3,
**dadurch gekennzeichnet, dass** die Halterung (172) mit einer Korbstruktur ausgebildet ist, wobei vorzugsweise eine Boden- und eine Oberseite voneinander beabstandet angeordnete Streben aufweisen und vorzugsweise gleichzeitig die Einlass- und Auslassseite der Wärmespeicherkomponente (170) bilden,
wobei optional sich die Streben jeweils im Wesentlichen vollständig über die Fläche der Boden- und der Oberseite der Wärmespeicherkomponente (170) erstrecken, an der die Strömungskanäle der Wärmespeichermedien (192, 190) enden.

5. Wärmespeicherkomponente (170) nach einem der Ansprüche 1 bis 4,
**dadurch gekennzeichnet, dass** die Halterung (172) vier Seitenwände aufweist, von denen zwei oder mehr, insbesondere einander gegenüberliegend angeordnete, Seitenwände als geschlossene Flächen ausgebildet sind,
oder dass alle Seitenwände offen und lediglich von Stegen begrenzt ausgebildet sind.

6. Wärmespeicherkomponente (170) nach Anspruch 5, **dadurch gekennzeichnet, dass** die Wärmespeicherkomponente (170) eine im Wesentlichen blockförmige Gestalt aufweist, optional mit einer trapezförmigen Boden- und Oberseite.

7. Wärmespeicherkomponente (170) nach Anspruch 5 oder 6, **dadurch gekennzeichnet, dass** zwei der Seitenwände zu einem Rahmen verbundene Stege aufweisen, wobei die Rahmen im Bereich der Boden- und der Oberseite mit zwei oder mehr Streben verbunden sind, wobei optional die Halterung (172) aus den beiden Rahmen und den sie verbindenden Streben besteht.

8. Wärmespeicherkomponente (170) nach einem der Ansprüche 1 bis 7, **dadurch gekennzeichnet, dass** die Halterung aus Baustahl, Edelstahl, Corten, emailliertem Stahl, mit Epoxidharz-Korrosionsschutz überzogenem Stahl oder Sonderwerkstoffen aus hochkorrosionsbständigen NickelChrom-Molybdän-Legierungen gefertigt ist.

9. Wärmespeicherkomponente (170) nach einem der Ansprüche 1 bis 8, **dadurch gekennzeichnet, dass** das virginale PTFE einen Co-Monomeranteil von ca. 1 Gew.-% oder weniger, bevorzugt ca. 0,1 Gew.-% oder weniger, aufweist, wobei optional das virginale PTFE und gegebenenfalls das von dem PTFE verschiedene Hochleistungspolymer eine mittlere Primärpartikelgröße D₅₀ von ca. 10 µm bis ca. 200 µm, bevorzugt ca. 10 µm bis ca. 100 µm, aufweisen.

10. Wärmespeicherkomponente (170) nach einem der Ansprüche 1 bis 9, **dadurch gekennzeichnet, dass** das zu dem Wabenblock (250) verarbeitete Kunststoffmaterial eine Reißfestigkeit aufweist, welche, gemessen nach ISO 12086-2 an einem streifenförmigen Probekörper mit einem Querschnitt von 1 x 5 mm², ca. 10 N/mm² oder mehr, insbesondere ca. 15 N/mm² oder mehr, bevorzugt ca. 20 N/mm² oder mehr, weiter bevorzugt ca. 25 N/mm² oder mehr, jedoch vorzugsweise ca. 35 N/mm² oder weniger, beträgt und/oder dass die Reißdehnung des Kunststoffmaterials des Wabenblocks (250), gemessen nach ISO 12086-2 an einem streifenförmigen Probekörper mit einem Querschnitt von 1 x 5 mm², ca. 80 % oder mehr, insbesondere ca. 100 % oder mehr, bevorzugt ca. 150 % oder mehr, weiter bevorzugt ca. 200 % oder mehr, beträgt.

11. Wärmespeicherkomponente (170) nach einem der Ansprüche 1 bis 10, **dadurch gekennzeichnet, dass** der Mittenrauwert Ra der Oberflächen des Wabenblocks (250), gemessen in Längsrichtung der Wabenblockkanäle, ca. 10 µm oder weniger, insbesondere ca. 5 µm oder weniger, beträgt und/oder dass die Rautiefe Rz der Oberflächen des Wabenblocks (250), gemessen in Längsrichtung der Strömungskanäle (252) des Wabenblocks (250), ca. 50 µm oder weniger, insbesondere ca. 40 µm oder weniger, bevorzugt ca. 30 µm oder weniger, weiter bevorzugt ca. 20 µm oder weniger, beträgt.

12. Wärmespeicherkomponente (170) nach einem der Ansprüche 1 bis 11, **dadurch gekennzeichnet, dass** das Kunststoffmaterial des Wabenblocks (250) einen nichtmetallischen Füllstoff und/oder einen metallischen Füllstoff umfasst, wobei die Partikelgröße D₅₀ des jeweiligen Füllstoffes vorzugsweise ca. 100 µm oder weniger beträgt,
wobei optional der nicht-metallische Füllstoff mit einem Anteil von ca. 80 Gew.-% oder weniger, bevorzugt ca. 40 Gew.-% oder weniger, weiter bevorzugt ca. 35 Gew.-% oder weniger in dem Kunststoffmaterial enthalten ist
und/oder dass der metallischen Füllstoff mit einem Anteil von ca. 90 Gew.-% oder weniger, bevorzugt ca. 60 Gew.-% oder weniger in dem Kunststoffmaterial enthalten ist, und/oder gesamte Volumenanteil der nichtmetallischen und metallischen Füllstoffe in dem Kunststoffmaterial ca. 90 Vol.-% oder weniger, bevorzugt ca. 50 Vol.-% oder weniger, weiter bevorzugt ca. 40 Vol.-% oder weniger beträgt.

13. Wärmespeicherkomponente (170) nach einem der Ansprüche 1 bis 12, **dadurch gekennzeichnet, dass** das Kunststoffmaterial des Wabenblocks (250) eine Wärmeleitfähigkeit von ca. 0,3 W/(m · K) oder mehr und/oder eine Wärmekapazität von ca. 0,9 J/(g · K) oder mehr aufweist.

14. Wärmespeicherkomponente (170) nach einem der Ansprüche 1 bis 13, **dadurch gekennzeichnet, dass** das die Kanalwände der Strömungskanäle (252) des Wabenblocks (250) eine Dicke von ca. 0,8 mm bis ca. 2 mm, bevorzugt von ca. 0,8 mm bis ca. 1,6 mm aufweisen.

15. Wärmetauscher (100), hergestellt unter Verwendung einer Mehrzahl an Wärmespeicherkomponenten (170) gemäß einem der Ansprüche 1 bis 14, wobei insbesondere die Wärmespeicherkomponenten (170) austauschbar in dem Wärmetauscher (100) platziert sind,
und/oder wobei der Wärmetauscher (100) als Rotor ausgebildet ist und optional Kammern zur Aufnahme der Wärmespeicherkomponenten (170) aufweist.

## Claims

1. Heat store component (170) for the passage of a flow of gas therethrough, in particular in heat exchangers of flue gas cleaning systems, comprising a mounting (172), a first heat storage medium (192) and a second heat storage medium (190), wherein the mounting (172) forms an inlet side and an outlet side of the heat store component for the flow of gas that is to be fed therethrough, wherein the first and second heat storage media (192, 190) are arranged one behind the other in the direction of flow of the gas between the inlet side and the outlet side of the mounting (172) and each has a plurality of substantially parallel flow channels, wherein the second heat storage medium (190) is formed of one or more honeycomb blocks (250), **characterized in that** the honeycomb block (250) or the honeycomb blocks (250) comprise a body that is produced in one-piece manner from a plastics material and has a plurality of flow channels (252) which are arranged in parallel with one another and are separated from each other by channel walls, wherein the plastics material comprises a plastics which contains virgin polytetrafluoroethylene (PTFE) as a fraction of ca. 80% by weight or more and optionally a high performance polymer differing from the PTFE as a fraction of ca. 20% by weight or less.

2. Heat store component (170) in accordance with Claim 1, **characterized in that** the second heat storage medium (190) extends over ca. 10% to ca. 60% of the flow path from the inlet side to the outlet side of the heat store component (170),
wherein the first heat storage medium (192) is optionally formed of steel, stainless steel, Corten, enamel coated steel, steel coated with an epoxy resin corrosion protector or highly corrosion resistant nickel-chromium-molybdenum alloys,
or **in that** the first heat storage medium (192) is of identical construction to the second heat storage medium (190), wherein the first and the second heat storage medium (192, 190) are optionally connected to form a unit.

3. Heat store component (170) in accordance with Claim 1 or 2,
**characterized in that** the mounting (172) is constructed of two parts, wherein a first part of the mounting comprises the inlet side and a second part comprises the outlet side of the heat store component (170) and wherein the first part is connectible to the second part, preferably directly, for forming the mounting (172).

4. Heat store component (170) in accordance with any one of Claims 1 to 3,
**characterized in that** the mounting (172) is configured having a basket structure, wherein a bottom side and an upper side preferably comprise mutually spaced struts and preferably form the inlet and outlet sides of the heat store component (170) at the same time,
wherein optionally each of the struts extends substantially entirely over the surface of the bottom side and the upper side of the heat store component (170) at which the flow channels of the heat storage media (192, 190) end.

5. Heat store component (170) in accordance with any one of Claims 1 to 4,
**characterized in that** the mounting (172) has four side walls, of which two or more side walls and in particular side walls arranged opposite each other are in the form of closed surfaces,
or **in that** all of the side walls are open and bounded only by bars.

6. Heat store component (170) in accordance with Claim 5, **characterized in that** the heat store component (170) has a substantially block-like shape, optionally with a trapezoidal bottom side and upper side.

7. Heat store component (170) in accordance with Claim 5 or 6,
**characterized in that** two of the side walls have bars connected to form a framework, wherein the frameworks are connected to two or more struts in the region of the bottom side and the upper side, wherein the mounting (172) optionally consists of the two frameworks and the struts connecting them.

8. Heat store component (170) in accordance with any one of Claims 1 to 7,
**characterized in that** the mounting is produced from structural steel, stainless steel, Corten, enameled steel, steel covered with epoxy resin corrosion protector or special materials made from highly corrosion resistant nickel-chromium-molybdenum alloys.

9. Heat store component (170) in accordance with any one of Claims 1 to 8,
**characterized in that** the virgin PTFE has a co-monomer fraction of ca. 1% or less by weight, preferably ca. 0.1% by weight or less, wherein optionally, the virgin PTFE and optionally the high performance polymer differing from the PTFE have a mean primary particle size D₅₀ of ca. 10 µm to ca. 200 µm, preferably of ca. 10 µm to ca. 100 µm.

10. Heat store component (170) in accordance with any one of Claims 1 to 9,
**characterized in that** the plastics material that has been processed into a honeycomb block (250) has a tear resistance, which, measured in accord with ISO 12086-2 on the basis of a strip-like test piece having a cross section of 1 x 5 mm², amounts to ca. 10 N/mm² or more, in particular ca. 15 N/mm² or more, preferably ca. 20 N/mm² or more and even more preferably ca. 25 N/mm² or more, but preferably however ca. 35 N/mm² or less, and/or **in that** the elongation at break of the plastics material of the honeycomb block (250), measured in accord with ISO 12086-2 on the basis of a strip-like test piece having a cross section of 1 x 5 mm², amounts to ca. 80% or more and in particular to ca. 100% or more, preferably to ca. 150% or more, and more preferably to ca. 200% or more.

11. Heat store component (170) in accordance with any one of Claims 1 to 10,
**characterized in that** the average roughness value Ra of the surfaces of the honeycomb block (250) as measured in the longitudinal direction of the honeycomb block channels amounts to ca. 10 µm or less, and in particular ca. 5 µm or less, and/or **in that** the surface roughness Rz of the surfaces of the honeycomb block (250) as measured in the longitudinal direction of the flow channels (252) of the honeycomb block (250) amounts to ca. 50 µm or less, in particular ca. 40 µm or less, preferably ca. 30 µm or less, and more preferably ca. 20 µm or less.

12. Heat store component (170) in accordance with any one of Claims 1 to 11,
**characterized in that** the plastics material of the honeycomb block (250) comprises a non-metallic filler and/or a metallic filler, wherein the particle size D₅₀ of the respective filler amounts to preferably ca. 100 µm or less. wherein optionally the non-metallic filler is contained in the plastics material as a fraction of ca. 80% or less by weight, preferably ca. 40% or less by weight and more preferably ca. 35% or less by weight,
and/or **in that** the metallic filler is contained in the plastics material as a fraction of ca. 90% or less by weight, preferably ca. 60% or less by weight, and/or the entire volumetric fraction of the non-metallic and metallic fillers in the plastics material amounts to ca. 90% or less by volume, preferably ca. 50% or less by volume and more preferably ca. 40% or less by volume.

13. Heat store component (170) in accordance with any one of Claims 1 to 12,
**characterized in that** the plastics material of the honeycomb block (250) has a thermal conductivity of ca. 0.3 W/(m • K) or more and/or a thermal capacity of ca. 0.9 J/(g • K) or more.

14. Heat store component (170) in accordance with any one of Claims 1 to 13,
**characterized in that** the channel walls of the flow channels (252) of the honeycomb block (250) have a thickness of ca. 0.8 mm to ca. 2 mm, preferably of ca. 0.8 mm to ca. 1.6 mm.

15. Heat exchanger (100) manufactured using a plurality of heat store components (170) in accordance with any one of Claims 1 to 14,
wherein in particular the heat store components (170) are placed in the heat exchanger (100) such as to be exchangeable,
and/or wherein the heat exchanger (100) is configured as a rotor and optionally has chambers for accommodating the heat store components (170).

## Revendications

1. Elément d'accumulation de chaleur (170) pour le passage d'un courant de gaz, en particulier dans des échangeurs de chaleur d'installations de nettoyage de gaz de fumée, comprenant un élément de retenue (172), un premier milieu d'accumulation de chaleur (192) et un deuxième milieu d'accumulation de chaleur (190), dans lequel l'élément de retenue (172) forme un côté d'entrée et de sortie de l'élément d'accumulation de chaleur pour le courant de gaz à faire passer, dans lequel les premier et deuxième milieux d'accumulation de chaleur (192, 190) sont situés l'un derrière l'autre entre le côté d'entrée et le côté de sortie de l'élément de retenue (172) dans le sens d'écoulement du courant de gaz et présentent chacun une pluralité de canaux d'écoulement sensiblement parallèles, dans lequel le deuxième milieu d'accumulation de chaleur (190) est formé d'un ou de plusieurs blocs en nid d'abeilles (250), **caractérisé en ce que** le ou les blocs en nid d'abeilles (250) comportent un corps fabriqué d'une seule pièce à partir d'un matériau synthétique et pourvu d'une pluralité de canaux d'écoulement (252) agencés parallèlement les uns aux autres, qui sont séparés les uns des autres par des parois de canal, dans lequel le matériau synthétique comporte un plastique qui contient du polytétrafluoréthylène (PTFE) vierge à raison d'environ 80 % en poids ou plus et, le cas échéant, un polymère à haute performance différent du PTFE à raison d'environ 20 % en poids ou moins.

2. Elément d'accumulation de chaleur (170) selon la revendication 1, **caractérisé en ce que** le deuxième milieu d'accumulation de chaleur (190) s'étend sur environ 10 % à environ 60 % de la voie d'écoulement du côté d'entrée au côté de sortie de l'élément d'accumulation de chaleur (170), dans lequel, éventuellement, le premier milieu d'accumulation de chaleur (192) est formé d'acier, d'acier inoxydable, d'acier corten, d'acier émaillé, d'acier revêtu d'une protection anticorrosion en résine époxyde ou d'alliages nickel-chrome-molybdène très résistants à la corrosion,
ou **en ce que** le premier milieu d'accumulation de chaleur (192) présente une conception identique à celle du deuxième milieu d'accumulation de chaleur (190), dans lequel, éventuellement, le premier et le deuxième milieu d'accumulation de chaleur (192, 190) sont reliés de manière à obtenir une unité.

3. Elément d'accumulation de chaleur (170) selon la revendication 1 ou 2, **caractérisé en ce que** l'élément de retenue (172) est conçu en deux parties, dans lequel une première partie de l'élément de retenue comporte le côté d'entrée et une deuxième partie comporte le côté de sortie de l'élément d'accumulation de chaleur (170) et dans lequel la première partie peut être reliée de préférence directement à la deuxième partie pour former l'élément de retenue (172).

4. Elément d'accumulation de chaleur (170) selon l'une quelconque des revendications 1 à 3, **caractérisé en ce que** l'élément de retenue (172) est réalisé avec une structure de panier, dans lequel, de préférence, une face inférieure et une face supérieure présentent des entretoises agencées à distance les unes des autres et forment de préférence simultanément le côté d'entrée et le côté de sortie de l'élément d'accumulation de chaleur (170), dans lequel, éventuellement, les entretoises s'étendent chacune sensiblement entièrement sur toute la surface de la face inférieure et de la face supérieure de l'élément d'accumulation de chaleur (170) sur laquelle les canaux d'écoulement des milieux d'accumulation de chaleur (192, 190) terminent.

5. Elément d'accumulation de chaleur (170) selon l'une quelconque des revendications 1 à 4, **caractérisé en ce que** l'élément de retenue (172) comprend quatre parois latérales parmi lesquelles deux parois latérales ou plus, agencées en particulier à l'opposé l'une de l'autre, sont réalisées sous la forme de surfaces fermées,
ou **en ce que** toutes les parois latérales sont ouvertes et uniquement délimitées par des éléments jointifs.

6. Elément d'accumulation de chaleur (170) selon la revendication 5, **caractérisé en ce que** l'élément d'accumulation de chaleur (170) présente une configuration sensiblement en forme de bloc, éventuellement pourvue d'une face inférieure et d'une face supérieure trapézoïdales.

7. Elément d'accumulation de chaleur (170) selon la revendication 5 ou 6, **caractérisé en ce que** deux des parois latérales présentent des éléments jointifs reliés de manière à obtenir un cadre, dans lequel les cadres sont reliés dans la zone de la face inférieure et de la face supérieure à deux entretoises ou plus, dans lequel, éventuellement, l'élément de retenue (172) est constitué des deux cadres et d'entretoises les reliant.

8. Elément d'accumulation de chaleur (170) selon l'une quelconque des revendications 1 à 7, **caractérisé en ce que** l'élément de retenue est fabriqué à partir d'acier de construction, d'acier inoxydable, d'acier corten, d'acier émaillé, d'acier revêtu d'une protection anticorrosion en résine époxyde ou de matériaux spéciaux composés d'alliages nickel-chrome-molybdène très résistants à la corrosion.

9. Elément d'accumulation de chaleur (170) selon l'une quelconque des revendications 1 à 8, **caractérisé en ce que** le PTFE vierge présente une proportion de co-monomère d'environ 1 % en poids ou moins, de préférence d'environ 0,1 % en poids ou moins, dans lequel, éventuellement, le PTFE vierge et le cas échéant le polymère à haute performance différent du PTFE présentent une taille de particule primaire moyenne D₅₀ d'environ 10 µm à environ 200 µm, de préférence d'environ 10 µm à environ 100 µm.

10. Elément d'accumulation de chaleur (170) selon l'une quelconque des revendications 1 à 9, **caractérisé en ce que** le matériau synthétique traité de manière à obtenir le bloc en nid d'abeilles (250) présente une résistance à la déchirure laquelle, mesurée selon ISO 12086-2 sur un échantillon en forme de bande présentant une section transversale de 1 x 5 mm², atteint environ 10 N/mm² ou plus, en particulier environ 15 N/mm² ou plus, de préférence environ 20 N/mm² ou plus, plus préférablement environ 25 N/mm² ou plus, mais de préférence environ 35 N/mm² ou moins, et/ou **en ce que** l'allongement à la rupture du matériau synthétique du bloc en nid d'abeille (250), mesuré selon ISO 12086-2 sur un échantillon en forme de bande présentant une section transversale de 1 x 5 mm², atteint environ 80 % ou plus, en particulier environ 100 % ou plus, de préférence environ 150 % ou plus, plus préférablement environ 200 % ou plus.

11. Elément d'accumulation de chaleur (170) selon l'une quelconque des revendications 1 à 10, **caractérisé en ce que** la rugosité moyenne Ra des surfaces du bloc en nid d'abeilles (250), mesurée dans la direction longitudinale des canaux de blocs en nid d'abeilles, atteint environ 10 µm ou moins, en particulier environ 5 µm ou moins, et/ou **en ce que** la profondeur de rugosité Rz des surfaces du bloc en nid d'abeilles (250), mesurée dans la direction longitudinale des canaux d'écoulement (252) du bloc en nid d'abeilles (250), atteint environ 50 µm ou moins, en particulier environ 40 µm ou moins, de préférence environ 30 µm ou moins, plus préférablement environ 20 µm ou moins.

12. Elément d'accumulation de chaleur (170) selon l'une quelconque des revendications 1 à 11, **caractérisé en ce que** le matériau synthétique du bloc en nid d'abeilles (250) comporte une charge non métallique et/ou une charge métallique, dans lequel la taille de particule D₅₀ de la charge respective atteint de préférence environ 100 µm ou moins,
dans lequel, éventuellement, la charge non métallique est contenue à raison d'environ 80 % en poids ou moins, de préférence d'environ 40 % en poids ou moins, plus préférablement d'environ 35 % en poids ou moins dans le matériau synthétique,
et/ou **en ce que** la charge métallique est contenue à raison d'environ 90 % en poids ou moins, de préférence d'environ 60 % en poids ou moins dans le matériau synthétique, et/ou la fraction volumique totale des charges non métallique et métallique dans le matériau synthétique atteint environ 90 % en volume ou moins, de préférence environ 50 % en volume ou moins, plus préférablement environ 40 % en volume ou moins.

13. Elément d'accumulation de chaleur (170) selon l'une quelconque des revendications 1 à 12, **caractérisé en ce que** le matériau synthétique du bloc en nid d'abeilles (250) présente une conductibilité thermique supérieure ou égale à environ 0,3 W/(m • K) et/ou une capacité thermique supérieure ou égale à environ 0,9 J/(g · K).

14. Elément d'accumulation de chaleur (170) selon l'une quelconque des revendications 1 à 13, **caractérisé en ce que** les parois des canaux d'écoulement (252) du bloc en nid d'abeilles (250) présentent une épaisseur d'environ 0,8 mm à environ 2 mm, de préférence d'environ 0,8 mm à environ 1,6 mm.

15. Echangeur de chaleur (100), fabriqué au moyen d'une pluralité d'éléments d'accumulation de chaleur (170) selon l'une quelconque des revendications 1 à 14, dans lequel, en particulier, les éléments d'accumulation de chaleur (170) sont placés de manière interchangeable dans l'échangeur de chaleur (100),
et/ou dans lequel l'échangeur de chaleur (100) est réalisé sous la forme d'un rotor et, éventuellement, présente des chambres destinées à recevoir les éléments d'accumulation de chaleur (170).
